# EUROPÄISCHE PATENTSCHRIFT

(11) **EP 4 271 538 B1**
(45) Veröffentlichungstag und Bekanntmachung des Hinweises auf die Patenterteilung: **08.10.2025**
(21) Anmeldenummer: 21839988.9
(22) Anmeldetag: 16.12.2021
(51) Int. Cl.: B24B 47/04

(54) **VERFAHREN UND VORRICHTUNG ZUR FEINBEARBEITUNG VON AXICONS, HIERFÜR GEEIGNETE FEINBEARBEITUNGSMASCHINE UND DEREN VERWENDUNG**
METHOD AND DEVICE FOR FINELY MACHINING AXICONS, FINE MACHINING DEVICE SUITABLE FOR THIS PURPOSE, AND USE THEREOF
PROCÉDÉ ET DISPOSITIF D'USINAGE DE PRÉCISION DE LENTILLES AXICON, MACHINE D'USINAGE DE PRÉCISION APPROPRIÉE ET UTILISATION Y RELATIVE

(30) Priorität: 30.12.2020 DE 102020007920
(43) Veröffentlichungstag der Anmeldung: 08.11.2023
(73) Patentinhaber: Satisloh GmbH, 35578 Wetzlar (DE)
(72) Erfinder: LEONHARDT, Christian, 61273 Wehrheim (DE); SILBACH, Eva, 35633 Lahnau (DE)
(74) Vertreter: Oppermann, Mark
(86) Internationale Anmeldenummer: PCT/EP2021/086335
(87) Internationale Veröffentlichungsnummer: WO 2022/144189

(56) Entgegenhaltungen:
- EP-A2- 2 298 498
- EP-B1- 3 357 640
- DE-A1- 102012 108 594
- DE-A1- 102014 015 053
- DE-A1- 102016 006 791
- DE-A1- 19 543 184

## Beschreibung

### TECHNISCHES GEBIET

Die vorliegende Erfindung bezieht sich allgemein auf ein Verfahren und eine Vorrichtung zur Feinbearbeitung eines Axicons sowie auf eine Feinbearbeitungsmaschine, die eine solche Vorrichtung umfasst, und die Verwendung dieser Feinbearbeitungsmaschine für die Feinbearbeitung eines Axicons. Insbesondere bezieht sich die Erfindung auf ein Verfahren und eine Vorrichtung zum Schleifen, Feinschleifen und/oder Polieren von konvex oder konkav konischen Linsenflächen, wie sie in der Feinoptik massenweise zu bearbeiten sind.

Ein "Axicon" ist im üblichen technischen Sprachgebrauch eine spezielle Linse, die an wenigstens einer ihren beiden optisch wirksamen Flächen konisch bzw. kegelförmig ausgebildet ist. Axicons können konvex oder konkav sein und aus jedem optischen Material - Quarzglas, Siliziumdioxid, Germanium, Silizium, Infrarot-Glas (Chalkogenidglas), Zerodur^{®}, etc. - hergestellt werden. Typisch sind etwa plan-konvexe oder plan-konkave Axicons. Im Sprachgebrauch der vorliegenden Erfindung soll unter einem "Axicon" im allgemeinsten Sinne werkstoffunabhängig jegliches Werkstück verstanden werden, welches an wenigstens einer Werkstückfläche mindestens einen Flächenabschnitt aufweist, der konvex oder konkav konisch geformt ist. Auch soll, wenn im Zusammenhang mit der vorliegenden Erfindung nachfolgend von einer "Kegelfläche" die Rede ist, dieser Begriff im weitesten Sinne verstanden werden und - neben konischen Ringflächen mit beliebiger axialer Berandung - ebenfalls nicht-ringförmige, konvex oder konkav gekrümmte Flächenabschnitte eines Werkstücks mit zu allen Seiten beliebiger Berandung inkludieren, die der mathematischen Beschreibung eines geraden Kreiskegels genügen.

### STAND DER TECHNIK

Einzelne Axicons erzeugen z.B. aus einem Laserstrahl ein ringförmiges Strahlprofil. Der Durchmesser des Ringstrahls ist dabei abhängig vom Konuswinkel des Axicons und nimmt mit wachsendem Abstand zwischen Axicon und Bildebene zu, wobei die Ringbreite konstant bleibt. Durch die Kombination eines Axicons mit weiteren Axicons oder anderen Linsen lassen sich vielfältige Strahlprofile erzeugen, wie dies beispielsweise in der Druckschrift DE 10 2015 201 639 B4 beschrieben ist.

So finden Axicons hauptsächlich Anwendung bei der Strahlformung und in diversen Laserapplikationen im Hochleistungsbereich. Beispielsweise werden Axicons im medizinischen Bereich in der Laser-Augenchirurgie genutzt. Die Fähigkeit, einen Laserstrahl in ein ringförmiges Strahlprofil zu fokussieren, ist hier bei der Glättung und dem Abtrag von Hornhautgewebe hilfreich. Durch die Kombination eines konvexen und eines konkaven Axicons, sowie die Variation des Abstands zueinander, kann dabei der Durchmesser des Rings für eine optimale Leistungsverteilung eingestellt werden.

Was die technischen Anforderungen angeht, die an Axicons gestellt werden, ist an dieser Stelle zu erwähnen, dass bei den oben erwähnten Anwendungen die zulässigen Oberflächenformabweichungen (RMSi = root-mean-square Abweichung nach DIN ISO 10110) je nach Anwendung in einem Bereich von RMSi ≤ 0,07 µm, teilweise sogar von RMSi ≤ 0,04 µm liegen. Der RMSi-Wert beschreibt hierbei den Unterschied zwischen dem Gesamtpassfehler und der bestangepassten Kugelfläche. Demgemäß ergeben sich für die Feinbearbeitung von Axicons im Verhältnis hohe Anforderungen an die zu erzielende Bearbeitungsqualität.

Die Herstellung bzw. Bearbeitung der optisch wirksamen Flächen von Axicons kann grob in zwei Bearbeitungsphasen unterteilt werden, nämlich zunächst die Formung oder Vorbearbeitung der optisch wirksamen Flächen zur Erzeugung der gewünschten Makrogeometrie und sodann die Feinbearbeitung der optisch wirksamen Flächen, um Vorbearbeitungsspuren zu beseitigen und die gewünschte Mikrogeometrie zu erhalten. Während die Formung oder Vorbearbeitung der optisch wirksamen Flächen von Axicons u.a. in Abhängigkeit vom Material der Axicons durch Fräsen, Drehen und/oder Schleifen oder aber auch ur- oder umformend (siehe z.B. die Druckschrift US 2013/0272653 A1) erfolgt, werden die optisch wirksamen Flächen von Axicons bei der Feinbearbeitung üblicherweise einem Feinschleif-, Läpp- und/oder Poliervorgang unterzogen, bei dem geometrisch unbestimmte Schneiden in Form von gebundenem oder losem Korn in Kombination mit einer Flüssigkeit zwischen Werkstück und Werkzeug zum Einsatz kommen, welche dabei relativ zueinander bewegt werden.

Bei einem bekannten Verfahren zur Bearbeitung eines Axicons werden - ähnlich dem in der Druckschrift DE 195 43 184 A1 offenbarten Prozess - die konischen Oberflächen des Axicons mittels eines durchmesserkleineren Polierwerkzeugs mit einer kegelförmigen Mantelfläche endbearbeitet. Dabei wird das um seine Mittelachse drehend antreibbare Polierwerkzeug so bezüglich des ebenfalls drehend um seine Kegelachse antreibbaren Axicons positioniert, dass die Mittelachse des Polierwerkzeugs und die Kegelachse des Axicons in einer Ebene liegen, wobei sich die Mantelfläche des Polierwerkzeugs an der zu polierenden konischen Fläche des Axicons ausrichtet. Im Ergebnis befinden sich die Mantelfläche des Polierwerkzeugs und die zu polierende konische Fläche des Axicons entlang eines Mantelflächenabschnitts des Polierwerkzeugs in Eingriff. Beim Polieren, welches unter der Zufuhr eines flüssigen Poliermittels erfolgt, werden das Polierwerkzeug und das Axicon gleich- oder (bevorzugt) gegenläufig drehend angetrieben, wobei das Polierwerkzeug zusätzlich axial entlang seines mit der zu polierenden konischen Fläche des Axicons in Kontakt stehenden Mantelflächenabschnitts verfahren wird, bis die konische Fläche des Axicons auspoliert ist.

Durch die Überlagerung der beiden Drehbewegungen des Polierwerkzeugs und des Axicons lässt sich insbesondere bei einem gegenläufigen Drehantrieb ein im Verhältnis großer Polierabtrag erzielen. Die hierbei erzeugte Relativbewegung zwischen Polierwerkzeug und Axicon verläuft jedoch fast ausschließlich in Umfangsrichtung bzw. je nach Vorschub des Polierwerkzeugs entlang des kontaktierenden Mantelflächenabschnitts des Polierwerkzeugs auch leicht spiralförmig. Darüber hinaus werden in verschiedenen Polierbereichen je nach radialem Abstand zur Mittel- bzw. Kegelachse verschiedene Abtragsleistungen erzielt. Bei diesem bekannten Polierprozess besteht die Gefahr, dass sich infolge der vorbeschriebenen Eingriffsverhältnisse zwischen Werkzeug und Werkstück Strukturen mit einer radialen Vorzugsrichtung auf der polierten Oberfläche ausbilden, die es insbesondere vor dem oben geschilderten Hintergrund der gewünschten Bearbeitungs- bzw. Oberflächenqualitäten zu vermeiden gilt.

Ferner offenbart die Druckschrift DE 36 43 914 A1 ein Verfahren und eine Vorrichtung zum Läppen bzw. Polieren sehr großer optischer Bauteile, wie sie z.B. für astronomische Beobachtungen benötigt werden. Konkret wird hier der Hauptspiegel eines Teleskops genannt. Bei diesem Stand der Technik ist das Werkzeug als streifenförmige flexible Membran von im offenbarten Beispiel 5 m Länge und 1 m Breite ausgebildet, die nur einen Teilbereich der zu bearbeitenden Fläche des Werkstücks bedeckt. Auf der von der zu bearbeitenden Fläche abgewandten Seite der Membran ist eine Vielzahl von Belastungselementen vorgesehen, die sich mit individuell steuerbarer Kraft auf der Rückseite der Membran abstützen und diese mit einer bestimmten Druckverteilung flächig gegen die zu bearbeitende Fläche drücken. Ferner weist die vorbekannte Vorrichtung für das Werkstück einen Drehantrieb mit einem daran angeschlossenen Winkelencoder auf, dessen Ausgang mit einer Steuerung verbunden ist, die dazu dient, die Belastungselemente anzusteuern.

Während der eigentlichen Bearbeitung wird die Membran in radialer Richtung in eine oszillierende Bewegung über der sich unter ihr drehenden, zu bearbeitenden Fläche des Werkstücks versetzt, wobei die die Membran gegen die zu bearbeitende Fläche drückenden Belastungselemente relativ zum Werkstück feststehen und nicht an der oszillierenden Bewegung der Membran teilnehmen. Dabei wird der zeitliche Verlauf der Druckverteilung abhängig vom Drehwinkel zwischen Werkstück und Werkzeug gesteuert, insbesondere um die Bearbeitungszeit zu verkürzen. Eine Feinbearbeitung von Axicons wird in diesem Stand der Technik indes weder adressiert noch ist sie mit dem hier offenbarten Druckverteilungskonzept möglich, schon nicht im Hinblick auf die feinzubearbeitende Kegelgeometrie am Axicon, dessen übliche Abmessungen und die hier zu erzielenden Bearbeitungsgenauigkeiten.

Des Weiteren umfasst gemäß der Druckschrift DE 10 2014 015 053 A1 eine Vorrichtung zur Feinbearbeitung von optisch wirksamen Flächen an Brillengläsern als Werkstücken eine in einen Arbeitsraum hineinragende Werkstückspindel, über die ein zu polierendes Werkstück um eine Werkstück-Drehachse drehend antreibbar ist, und zwei der Werkstückspindel zugeordnet und gegenüberliegend in den Arbeitsraum hineinragende Werkzeugspindeln. An den Werkzeugspindeln ist jeweils ein elastisches Polierwerkzeug um eine Werkzeug-Drehachse drehend antreibbar und entlang der Werkzeug-Drehachse axial zustellbar gehalten. Ferner sind die Werkzeugspindeln relativ zur Werkstückspindel gemeinsam entlang einer im Wesentlichen senkrecht zur Werkstück-Drehachse verlaufenden Linearachse bewegbar und um verschiedene Schwenk-Stellachsen schwenkbar, die im Wesentlichen senkrecht zur Werkstück-Drehachse und im Wesentlichen senkrecht zu der Linearachse verlaufen. Dabei sind die Werkzeugspindeln in Richtung der Linearachse gesehen hintereinander angeordnet. Infolge der getroffenen Anordnung baut die Vorrichtung sehr kompakt und ist vielfältig für verschiedene Polierprozesse und -strategien in der Brillenoptik einsetzbar.

Ferner offenbart die Druckschrift EP 3 357 640 B1 ein translatorisch wirkendes Werkzeugmodul zur Feinbearbeitung, umfassend mindestens ein einen Anpresshub aufweisendes Feinbearbeitungselement, mindestens ein Anpresskraftsystem zur Beeinflussung einer Anpresskraft des mindestens einen Feinbearbeitungselements auf eine zu bearbeitende Werkstückoberfläche und Antriebsmittel zum Antrieb des mindestens einen Feinbearbeitungselements. Dabei ist das mindestens eine Feinbearbeitungselement an mindestens einer mittels der Antriebsmittel angetriebenen und linear geführten Translationseinheit angeordnet ist. Darüber hinaus ist bei diesem Stand der Technik mindestens eine in der Translationseinheit oder in mindestens einer der Translationseinheiten angeordnete, zur Übertragung einer Kraft auf das Feinbearbeitungselement oder auf mindestens eines der Feinbearbeitungselemente dienende Übertragungseinrichtung vorgesehen, bei der es sich um eine ein Kolben-Zylindersystem umfassende und mit Fluiddruck betriebene Druckübertragungseinrichtung oder eine elektrisch betriebene Kraftübertragungseinrichtung handelt.

Eine Besonderheit besteht bei diesem Werkzeugmodul darin, dass eine Maschinen-Schnittstelle zum Anschluss an eine Maschine, insbesondere eine Werkzeugmaschine oder einen Roboter, vorgesehen ist, wobei die vorerwähnten Antriebsmittel Umsetzungsmittel zur Umsetzung einer Rotationsbewegung eines Maschinenelements in die linear geführte Translationsbewegung der mindestens einen Translationseinheit umfassen, die Maschinen-Schnittstelle zum Anschluss an eine Spindel eingerichtet ist und die Umsetzungsmittel zur Umsetzung einer Rotation der Spindel vorgesehen sind.

Schließlich ist aus der Druckschrift DE 10 2012 108 594 A1 eine Vorrichtung zur Finishbearbeitung von Werkstücken bekannt, umfassend einen Werkzeughalter, der eine Schnittstelle mit einer drehbaren gelagerten Spindel zum Anschluss an eine Motorspindel einer Werkzeugmaschine sowie eine Abtriebswelle aufweist, eine Werkzeugaufnahme für mindestens ein Finishwerkzeug und einen Oszillationskopf mit einer Exzenteranordnung zur Transformation von Rotationsbewegungen der Abtriebswelle in Oszillationsbewegungen der Werkzeugaufnahme.

Eine Besonderheit dieser Vorrichtung besteht nun darin, dass die Abtriebswelle axial verschiebbar und in Drehrichtung formschlüssig innerhalb einer Hohlwelle angeordnet ist, die durch eine Rotation der Spindel in Rotation versetzt wird. Ferner ist der Oszillationskopf in Axialrichtung der Abtriebswelle linear beweglich an dem Werkzeughalter geführt, wobei dem Oszillationskopf eine in Zustellrichtung des Werkzeugs wirkende Andruckeinrichtung zugeordnet ist. Letztlich ist die Exzenteranordnung des Oszillationskopfs auf einem Wellenende der Abtriebswelle angeordnet und bildet mit dieser eine relativ zur Hohlwelle verschiebbare Funktionseinheit.

### AUFGABENSTELLUNG

Der Erfindung liegt die Aufgabe zugrunde, ein möglichst einfaches Verfahren zur Feinbearbeitung eines Axicons bereitzustellen, das die oben zum Stand der Technik angesprochenen Probleme adressiert. Insbesondere soll das Verfahren eine möglichst schnelle Feinbearbeitung eines Axicons mit hoher Bearbeitungsqualität ermöglichen, ohne die Gefahr der Ausbildung von unerwünschten Strukturen oder anderen Oberflächenfehlern an der feinbearbeiteten Kegelfläche des Axicons. Die Erfindungsaufgabe umfasst ferner die Angabe einer Vorrichtung zur verbesserten Feinbearbeitung eines Axicons, die möglichst einfach und ohne großen Rüstaufwand einsetzbar ist, sowie einer hierfür geeigneten Feinbearbeitungsmaschine, einschließlich deren Verwendung für die qualitativ hochwertige Feinbearbeitung eines Axicons.

### DARSTELLUNG DER ERFINDUNG

Diese Aufgaben werden durch ein Verfahren mit den Verfahrensschritten gemäß dem Patentanspruch 1, eine Vorrichtung mit den Merkmalen des Patentanspruchs 4 bzw. eine Feinbearbeitungsmaschine mit den Merkmalen des Patentanspruchs 10 sowie die Verwendung einer Feinbearbeitungsmaschine gemäß dem Patentanspruch 12 gelöst. Vorteilhafte Ausgestaltungen der Erfindung sind Gegenstand der abhängigen Patentansprüche.

Erfindungsgemäß ist bei einem Verfahren zur Feinbearbeitung eines Axicons, das wenigstens eine konkave oder konvexe Kegelfläche mit einer Kegelachse und einem Kegelwinkel aufweist, vorgesehen, mittels eines Werkzeugs, welches einen Bearbeitungsbereich für einen linienförmigen Eingriff mit der zu bearbeitenden Kegelfläche besitzt, der ein bezüglich der Kegelachse vorderes Ende hat, unter Einsatz von geometrisch unbestimmten Schneiden in Form von gebundenem oder losem Korn in Kombination mit einer Flüssigkeit an dem Bearbeitungsbereich des Werkzeugs, an der Kegelfläche des Axicons einen Materialabtrag durch eine relative Schnittgeschwindigkeit zu erzeugen, die sich alleine aus einer Drehbewegung des Axicons um die Kegelachse und einer relativen oszillierenden Linearbewegung entlang einer Oszillationsachse des sich dabei im linienförmigen Eingriff mit der zu bearbeitenden Kegelfläche befindenden Werkzeugs ergibt, bei der sich das vordere Ende des Bearbeitungsbereichs in einer Draufsicht gesehen in bezüglich der Kegelachse radialer Richtung vor und zurück bewegt.

Wie Untersuchungen der Erfinder ergeben haben, werden durch das lediglich quer zur Drehbewegung des Axicons in Kegelwinkelrichtung oszillierende Werkzeug, welches nur linienartig an der zu bearbeitenden Kegelfläche des Axicons anliegt, radiale Rillenstrukturen, Oberflächenformfehler, hohe Oberflächenrauheiten und Winkelfehler auf bzw. an der Kegelfläche des Axicons zuverlässig vermieden. Infolge des erfindungsgemäßen Verfahrens wird die bearbeitete Kegelfläche des Axicons vielmehr sauber geglättet. Im Verhältnis hohe Abtragsleistungen und damit eine möglichst schnelle Feinbearbeitung lassen sich leicht durch geeignete Wahl der Drehzahl des Axicons um die Kegelachse und/oder der Oszillationsfrequenz des Werkzeugs über der zu bearbeitenden Kegelfläche des Axicons erzielen. Bei der erfindungsgemäß vorgesehenen linienartigen Auflage des Werkzeugs an der Kegelfläche des Axicons ist es zudem vorteilhaft möglich, dem Werkzeug durch entsprechende Anstellung des Werkzeugs zur Kegelfläche an seinem bezüglich der Kegelachse vorderen oder hinteren Ende eine gewisse Vorspannung zu geben und damit die Druckverteilung über der Länge des Werkzeugs zu beeinflussen, womit in Grenzen auch eine Winkelkorrektur an der Kegelfläche des Axicons möglich ist.

Hierbei kann in einer zweckmäßigen Verfahrensausgestaltung ein 2-stufiges Vorgehen vorgesehen sein, bei dem zwischen dem Axicon und dem Werkzeug nach Maßgabe des Kegelwinkels zunächst eine relative Ausricht- und Zustellbewegung (1. Stufe) erzeugt wird, infolge der der Bearbeitungsbereich des Werkzeugs mit der Kegelfläche des Axicons in den linienförmigen Eingriff tritt, wobei das vordere Ende des Bearbeitungsbereichs der Kegelachse zugewandt ist, worauf zwischen dem um die Kegelachse bzw. um eine Werkstück-Drehachse drehend angetriebenen Axicon und dem Werkzeug die relative oszillierende Linearbewegung entlang der Oszillationsachse als Vorschubbewegung (2. Stufe) erzeugt wird, bei der sich das vordere Ende des Bearbeitungsbereichs während einer Umdrehung des Axicons um die Kegelachse in der Draufsicht gesehen mehrfach über der Kegelfläche von einem äußeren Randbereich der Kegelfläche in bezüglich der Kegelachse radialer Richtung wenigstens bis nahe an die Kegelachse und wieder zurück bewegt.

In diesem Zusammenhang bedeutet "wenigstens bis nahe der Kegelachse", dass bei der Vorschubbewegung, genauer mit einem geeigneten Oszillationshub der Vorschubbewegung sicherzustellen ist, dass die gesamte Kegelfläche des Axicons vom Werkzeug überstrichen und damit feinbearbeitet wird. Im Falle einer konvexen Kegelfläche kann dies eine Vorschubbewegung des Werkzeugs über die Kegelachse hinaus umfassen. Im Falle der Kegelfläche eines konkaven Axicons, das infolge seiner Vorbearbeitung zur Erzeugung der gewünschten Makrogeometrie im Bereich der Kegelachse in der Regel einen sich entlang der Kegelachse erstreckenden Durchgang mit einem kleinen Durchmesser von z.B. 2 mm aufweist, endet die Vorschubbewegung in Richtung der Kegelachse, wenn das Werkzeug mit dem vorderen Ende seines Bearbeitungsbereichs diesen Durchgang erreicht. Mit anderen Worten gesagt, ist in dem Fall einer konkaven Kegelfläche sicherzustellen, dass das Werkzeug bei seiner Vorschubbewegung mit dem vorderen Ende seines Bearbeitungsbereichs nicht über die Kegelachse hinaus oszilliert.

In weiterer Verfolgung des Erfindungsgedankens kann vorgesehen sein, dass während der Feinbearbeitung der Kegelfläche eine Drehzahl des Axicons um die Kegelachse und eine Frequenz der relativen oszillierenden Linearbewegung entlang der Oszillationsachse des Werkzeugs über der Kegelfläche derart aufeinander abgestimmt sind, dass die Anzahl der Hin- und Herbewegungen des Werkzeugs pro Umdrehung des Axicons nicht geradzahlig ist. Hierdurch wird auf einfache Weise vermieden, dass sich das Werkzeug nach einer Umdrehung des Axicons um die Kegelachse just in genau der Radialposition befindet, in der es sich am Anfang dieser Umdrehung des Axicons befand. Somit findet während der Feinbearbeitung mit jeder Umdrehung des Axicons um die Kegelachse vorteilhaft ein durchgehender "Spurwechsel" des Werkzeugs auf der feinbearbeiteten Kegelfläche statt. Dies ist einer sehr guten Flächenqualität förderlich. Was hierbei die Anzahl der Hin- und Herbewegungen des Werkzeugs pro Umdrehung des Axicons angeht, kann diese grundsätzlich ganzzahlig oder aber auch nicht-ganzzahlig sein, so dass die Umkehrpunkte des Werkzeugs an verschiedenen Winkelpositionen des Axicons bezüglich der Kegelachse liegen.

Wie Untersuchungen der Erfinder gezeigt haben, ist es vorteilhaft, wenn während der Feinbearbeitung der Kegelfläche die Anzahl der Hin- und Herbewegungen des Werkzeugs pro Umdrehung des Axicons um die Kegelachse größer gleich 3 und kleiner gleich 7 ist. Bei einem entsprechenden Verhältnis von Frequenz zu Drehzahl sind die Verweilzeiten des Bearbeitungsbereichs des Werkzeugs auf einem Flächenabschnitt der Kegelfläche des Axicons nicht zu lang und auch nicht zu kurz, so dass sich ein sehr gutes, d.h**.** gleichmäßiges Feinbearbeitungsergebnis erzielen lässt.

Eine Vorrichtung zur Feinbearbeitung eines Axicons, das wenigstens eine konkave oder konvexe Kegelfläche mit einer Kegelachse und einem Kegelwinkel aufweist, mit einem Werkzeug, welches einen Bearbeitungsbereich für einen linienförmigen Eingriff mit der zu bearbeitenden Kegelfläche besitzt, umfasst nach einem weiteren Aspekt der Erfindung eine Basis, die angepasst ist, an einer Werkzeugspindel einer Feinbearbeitungsmaschine angeflanscht zu werden, eine an der Basis montierte Führungsanordnung, die einen entlang einer Oszillationsachse oszillierend antreibbaren Werkzeugschlitten längsbeweglich führt, der das Werkzeug zur Feinbearbeitung des Axicons trägt, einen Getriebemechanismus, der angepasst ist, eine von der Werkzeugspindel erzeugte Drehbewegung in eine hin- und hergehende Linearbewegung des Werkzeugschlittens entlang der Oszillationsachse umzusetzen, und hierfür eine mit der Werkzeugspindel antriebsverbindbare Rotationsscheibe aufweist, die um eine Rotationsachse drehbar ist und an der ein Führungsbolzen bezüglich der Rotationsachse radial versetzt angebracht ist, der in einem Schlitz eingreift, welcher sich quer zur Oszillationsachse erstreckend in dem Werkzeugschlitten ausgebildet ist, so dass der Werkzeugschlitten mit einem vorbestimmten Hub entlang der Oszillationsachse oszillierend antreibbar ist, wobei die Rotationsscheibe mit mehrere Befestigungsbohrungen für den Führungsbolzen versehen ist, die einen unterschiedlichen radialen Abstand zur Rotationsachse haben, so dass der Hub des Werkzeugschlittens einstellbar ist, und/oder wobei der Werkzeugschlitten wenigstens zwei sich parallel zueinander erstreckende Schlitze für den wahlweisen Eingriff des Führungsbolzens aufweist, über die eine axiale Relativlage des Werkzeugschlittens bezüglich der Rotationsachse einstellbar ist.

Somit ist für die Feinbearbeitung eines Axicons, die wie vorstehend beschrieben erfolgen kann, nicht eine speziell dafür ausgebildete Feinbearbeitungsmaschine vorzuhalten, vielmehr kann eine konventionelle Schleif- oder Poliermaschine zum Einsatz kommen, an deren Werkzeugspindel die erfindungsgemäße Vorrichtung zur Feinbearbeitung eines Axicons mit ihrer Basis angeflanscht wird. Eine schnelle Einrichtung einer vorhandenen Schleif- oder Poliermaschine zur Feinbearbeitung von Axicons ist somit ohne großen Rüstaufwand möglich. Bei der eigentlichen Feinbearbeitung werden dann vorteilhaft die vorhandenen Maschinenachsen der Schleif- oder Poliermaschine verwendet, um die Zustellung und Ausrichtung des Werkzeugs mit seinem Bearbeitungsbereich bezüglich der zu bearbeitenden Kegelfläche am Axicon zu bewirken.

Da für den oszillierenden Antrieb des Werkzeugschlittens der Getriebemechanismus vorgesehen ist, der angepasst ist, die von der Werkzeugspindel der Feinbearbeitungsmaschine erzeugte Drehbewegung in die hin- und hergehende Linearbewegung des Werkzeugschlittens entlang der Oszillationsachse umzusetzen, ist der vorrichtungstechnische Aufwand vorteilhaft gering und es besteht eine einfache Möglichkeit, eine vorhandene Feinbearbeitungsmaschine mit der vorbeschriebenen Vorrichtung zur Feinbearbeitung eines Axicons nachzurüsten.

In einer besonders einfachen konstruktiven Ausgestaltung weist der Getriebemechanismus hierbei die mit der Werkzeugspindel der Feinbearbeitungsmaschine antriebsverbindbare, um die Rotationsachse drehbare Rotationsscheibe mit dem daran bezüglich der Rotationsachse radial versetzt angebrachten Führungsbolzen auf, der in dem sich quer zur Oszillationsachse erstreckend in dem Werkzeugschlitten ausgebildeten Schlitz eingreift, so dass der Werkzeugschlitten mit vorbestimmtem Hub entlang der Oszillationsachse oszillierend antreibbar ist.

Im Hinblick auf einen möglichst variablen Einsatz der Vorrichtung für die Feinbearbeitung von geometrieverschiedenen Axicons ist es dabei von Vorteil, dass die Rotationsscheibe mehrere Befestigungsbohrungen für den Führungsbolzen mit unterschiedlichem radialen Abstand zur Rotationsachse aufweist, so dass der Hub des Werkzeugschlittens - in Stufen - einstellbar ist, und/oder dass der Werkzeugschlitten die wenigstens zwei parallelen Schlitze für den wahlweisen Eingriff des Führungsbolzens hat, über die die axiale Relativlage des Werkzeugschlittens bezüglich der Rotationsachse einstellbar ist. Während der Feinbearbeitung eines bestimmten Axicons verbleibt der Führungsbolzen dann in dem ihm vor der Feinbearbeitung dieses Axicons zugeordneten Schlitz des Werkzeugschlittens.

Ferner sieht die vorliegende Erfindung auch eine Feinbearbeitungsmaschine vor, umfassend eine Werkzeugspindel mit einer Werkzeug-Drehachse C und eine Werkstückspindel mit einer Werkstück-Drehachse D, die in einen von einem Maschinenbett begrenzten Arbeitsraum hineinragen und wenigstens in einer gedachten, durch die Werkzeug-Drehachse und die Werkstück-Drehachse aufgespannten Ebene Y-Z relativ zueinander verfahrbar (Y-Achse, Z-Achse) sowie bezüglich einer Schwenkachse A, die senkrecht zu der Ebene Y-Z verläuft, relativ zueinander verschwenkbar sind, wobei an einem der Werkstückspindel zugewandten Ende der Werkzeugspindel die hier vorgeschlagene Vorrichtung zur Feinbearbeitung eines Axicons montiert ist.

Das Maschinenbett der Feinbearbeitungsmaschine kann dabei in einer besonders steifen und speziell für hohe Genauigkeitsanforderungen in der Optikfertigung geschaffenen Ausgestaltung zwei Seitenwandungen aufweisen, zwischen denen der Arbeitsraum ausgebildet ist und die ein in einer Längsrichtung entlang der Y-Achse verfahrbares Portal auflagern, an dem die Werkzeugspindel wenigstens in einer zur Längsrichtung entlang der Y-Achse senkrechten Richtung entlang der Z-Achse verfahrbar geführt ist, und wobei in dem Arbeitsraum ein die Werkstückspindel tragendes Joch vorgesehen ist, welches an den Seitenwandungen um die Schwenkachse A drehbar gelagert ist, wie es z.B. in dem deutschen Patent DE 100 29 967 B4 der vorliegenden Anmelderin beschrieben ist.

Darüber hinaus sieht die vorliegende Erfindung eine Verwendung der vorbeschriebenen Feinbearbeitungsmaschine, an deren Werkzeugspindel die vorgeschlagene Vorrichtung zur Feinbearbeitung eines Axicons montiert ist, für die Feinbearbeitung eines Axicons vor, das wenigstens eine konkave oder konvexe Kegelfläche mit einer Kegelachse und einem Kegelwinkel aufweist.

Was des Weiteren die Vorrichtung zur Feinbearbeitung eines Axicons angeht, kann deren Führungsanordnung in einer besonders einfachen konstruktiven Ausgestaltung einen Führungsrahmen aufweisen, an dem auf einander gegenüberliegenden Seiten Führungsschienen für den Werkzeugschlitten angebracht sind.

Bei den Führungsschienen kann es sich hierbei grundsätzlich um solche mit Wälzkörpern handeln, die besonders leichtgängig sind. Demgegenüber auch im Hinblick auf geringe Kosten und eine einfache Ausgestaltung der Vorrichtung bevorzugt ist es indes, wenn die aus einem Gleitlagerwerkstoff, wie beispielsweise einer Sinterbronze, einer Kupferlegierung, einem geeigneten Kunststoff, wie etwa Polytetrafluorethylen (PTFE) bzw. Teflon^{®}, od.dgl. bestehenden Führungsschienen auf einander zugewandten Seiten jeweils eine V-förmige Nut aufweisen, wobei der Werkzeugschlitten auf voneinander abgewandten Seiten jeweils einen keilförmigen Führungsabschnitt besitzt, und wobei die keilförmigen Führungsabschnitte des Werkzeugschlittens in den V-förmigen Nuten der Führungsschienen gleitfähig aufgenommen sind. In einer solchen Ausgestaltung ist die Führungsanordnung besonders unempfindlich gegen das abrasive Poliermittel, also verschleißarm, ist einfach zu reinigen und bedarf zudem für eine ausreichende Leichtgängigkeit keiner zusätzlichen Schmierung mit Fetten o. Ä., die einem guten Polierergebnis abträglich sein könnten.

In einer besonders einfachen Variante der Vorrichtung zur Feinbearbeitung eines Axicons kann das Werkzeug ggf. unter Zuhilfenahme eines Abstandhalters starr mit dem Werkzeugschlitten verbunden sein. Eine gewisse Feinfühligkeit beim Ineingriffbringen und -halten des Bearbeitungsbereichs des Werkzeugs mit der feinzubearbeitenden Kegelfläche des Axicons muss in einem solchen Fall über die Bewegungsachsen der Feinbearbeitungsmaschine geleistet werden, was eine geeignete Sensorik an der Feinbearbeitungsmaschine erfordert.

Im Vergleich dazu bevorzugt ist allerdings eine Ausgestaltung der Vorrichtung, bei der an dem Werkzeugschlitten ein Verbindungsteil mit einer weiteren Führungsanordnung angebracht ist, die dazu dient, das Werkzeug in einer Richtung quer zur Oszillationsachse des Werkzeugschlittens beweglich zu führen, wobei das Werkzeug in der Richtung quer zur Oszillationsachse des Werkzeugschlittens mit einer Kraft beaufschlagt ist, die das Werkzeug vom Verbindungsteil wegdrückt. Somit besitzt die Vorrichtung selbst keine "harte" Führung, sondern vorteilhaft eine gewisse Weichheit, so dass das Werkzeug bei der Feinbearbeitung der Kegelfläche gegen die beaufschlagende Kraft in der Richtung quer zur Oszillationsachse ausweichen kann, was eine die Makrogeometrie der Kegelfläche besonders schonende Feinbearbeitung gestattet.

Prinzipiell kann die vorbeschriebene Kraft in der Richtung quer zur Oszillationsachse z.B. mittels einer Feder oder mehreren Federn oder unter Einsatz eines Gummis oder elastischen Schaums od.dgl., die/das/der drückend oder ziehend zwischen dem Verbindungsteil und dem Werkzeug wirkt, erzeugt werden. Insbesondere im Hinblick auf einen geringen Verschleiß und eine gute Reinigungsmöglichkeit ist in einer bevorzugten Ausgestaltung der Vorrichtung zur Feinbearbeitung eines Axicons die vorbeschriebene Kraft durch wenigstens zwei einander abstoßende Magneten aufgebracht, die zwischen dem Verbindungsteil und dem Werkzeug angeordnet sind. Solche Magneten sind in dieser Position zwar dem abrasiven Poliermittel ausgesetzt, werden von diesem jedoch nicht angegriffen.

Zur beweglichen Führung des Werkzeugs quer zur Oszillationsachse kann die weitere Führungsanordnung grundsätzlich eine beliebige Linearführung aufweisen, beispielsweise eine Linearführung mit einer profilierten Führungsschiene an dem Verbindungsteil und einem darauf laufenden, rollengelagerten Wagen auf der Werkzeugseite. Insbesondere im Hinblick auf einen möglichsten kleinen Bauraumbedarf ist es indes bevorzugt, wenn die weitere Führungsanordnung wenigstens einen Führungszylinder aufweist. So können beispielsweise im Verbindungsteil zwei parallele Zylinderbohrungen ausgebildet sein, welche jeweils eine Führungsstange aufnehmen, die am Werkzeug geeignet befestigt ist.

Entlang der Oszillationsachse des Werkzeugs gesehen kann das Verbindungsteil prinzipiell in einer festen Axialposition an dem Werkzeugschlitten montiert sein, wie auch das Werkzeug in einer festen Axialposition zum Verbindungsteil angeordnet sein kann. Demgegenüber bevorzugt ist allerdings eine Ausgestaltung der Vorrichtung, bei der das Verbindungsteil in seiner axialen Lage entlang der Oszillationsachse veränderbar am Werkzeugschlitten befestigt ist und/oder das Werkzeug in seiner axialen Lage entlang der Oszillationsachse veränderbar an der weiteren Führungsanordnung montiert ist. Somit bestehen weitere Möglichkeiten der Einflussnahme auf die axiale Lage des Werkzeugs bei der Feinbearbeitung eines Axicons, was wiederum besonders im Hinblick auf einen möglichst flexiblen Einsatz der Vorrichtung für die Feinbearbeitung geometrieverschiedener Axicons von Vorteil ist.

Für das Werkzeug selbst sind verschiedene Ausgestaltungen denkbar, bei denen der Bearbeitungsbereich des Werkzeugs einen linienförmigen Eingriff mit der zu bearbeitenden Kegelfläche des Axicons sicherstellt. So kann das Werkzeug in einer ersten Variante in einer Draufsicht gesehen im Wesentlichen die Form eines gleichschenkligen Dreiecks aufweisen, mit einem Bearbeitungsbereich, der an einer Spitze des Dreiecks ein vorderes Ende hat und auf voneinander abgewandten, langen Seiten des Dreiecks jeweils einen linienförmigen Eingriff mit der zu bearbeiteten Kegelfläche des Axicons gestattet. Ein solches Werkzeug ist für die Bearbeitung von konkaven Axicons gedacht. Aufgrund des doppelten, zu beiden langen Seiten des Werkzeugs stattfindenden linienförmigen Eingriffs mit der zu bearbeitenden Kegelfläche des konkaven Axicons bietet dieses Werkzeug vorteilhaft eine hohe Abtragsleistung.

In einer zweiten, alternativen Variante kann das Werkzeug im Wesentlichen leistenförmig sein, mit einem Bearbeitungsbereich, der an einer Querseite des Werkzeugs ein vorderes Ende hat und entlang einer Längsseite des Werkzeugs einen linienförmigen Eingriff mit der zu bearbeiteten Kegelfläche des Axicons gestattet. Ein solches Werkzeug ist gleichermaßen für die Bearbeitung von konkaven und konvexen Axicons geeignet, besitzt allerdings eine geringere Abtragsleistung als das Werkzeug gemäß der obigen ersten Variante.

Zu dem Bearbeitungsbereich des jeweiligen Werkzeugs ist an dieser Stelle schließlich noch darauf hinzuweisen, dass das jeweilige Werkzeug dort mit einem geeigneten, handelsüblichen Poliermittelträger - wie z.B. einem Polierfilz oder einer Polierfolie - versehen ist, der auf dem Werkzeug aufgeklebt ist. Dieser Poliermittelträger wird im Folgenden nicht jeweils eigens erwähnt oder gezeigt.

Weitere Merkmale, Eigenschaften und Vorteile des erfindungsgemäßen Verfahrens, der erfindungsgemäßen Vorrichtung sowie der erfindungsgemäß ausgerüsteten Feinbearbeitungsmaschine und deren Verwendung ergeben sich für den Fachmann aus der nachfolgenden Beschreibung bevorzugter Ausführungsbeispiele.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, in denen gleiche oder entsprechende Teile oder Abschnitte mit den gleichen Bezugszeichen versehen sind. In den Zeichnungen zeigen:
- Fig. 1: eine perspektivische Ansicht einer erfindungsgemäß ausgerüsteten Feinbearbeitungsmaschine für optische Werkstücke von schräg oben / vorne links, mit Blick in einen Arbeitsraum der Feinbearbeitungsmaschine und auf eine erfindungsgemäße Vorrichtung zur Feinbearbeitung eines Axicons, die dort an einem Ende einer in Fig. 1 oberen Werkzeugspindel montiert ist, das einer in Fig. 1 unteren Werkstückspindel in einem schwenkbaren Joch der Feinbearbeitungsmaschine zugewandt ist;
- Fig. 2: eine Draufsicht auf die in Fig. 1 gezeigte Feinbearbeitungsmaschine von oben in Fig. 1;
- Fig. 3: eine gegenüber dem Maßstab der Fig. 1 und 2 vergrößerte, perspektivische Ansicht von separiert gezeigten Baugruppen der Feinbearbeitungsmaschine gemäß Fig. 1 von schräg oben / vorne links, nämlich eines Vertikalschlittens mit der Werkzeugspindel und des Jochs mit der Werkstückspindel sowie der dazwischen angeordneten Vorrichtung zur Feinbearbeitung eines Axicons, wobei sich ein linear oszillierend angetriebenes, im Wesentlichen dreieckiges Werkzeug der Vorrichtung mit einem an der Werkstückspindel gehaltenen, drehend angetriebenen, konkaven Axicon in Bearbeitungseingriff befindet;
- Fig. 4: eine gegenüber dem Maßstab der Fig. 3 nochmals vergrößerte, perspektivische Ansicht von separiert gezeigten Baugruppen der Feinbearbeitungsmaschine gemäß Fig. 1 von schräg oben / vorne links, die sich von der Ansicht gemäß Fig. 3 lediglich dahingehend unterscheidet, dass der Vertikalschlitten mit der Werkzeugspindel bis auf deren Spannfutter weggelassen wurde, um den Blick auf die Vorrichtung zur Feinbearbeitung eines Axicons freizugeben;
- Fig. 5: eine gegenüber dem Maßstab der Fig. 4 nochmals vergrößerte, perspektivische Ansicht der Vorrichtung zur Feinbearbeitung eines Axicons gemäß Fig. 1 von schräg unten / vorne links, die - bis auf das Spannfutter der Werkzeugspindel - von der Feinbearbeitungsmaschine gemäß Fig. 1 separiert gezeigt ist;
- Fig. 6: eine Seitenansicht der in Fig. 5 gezeigten Vorrichtung zur Feinbearbeitung eines Axicons;
- Fig. 7: eine Unteransicht der in Fig. 5 gezeigten Vorrichtung zur Feinbearbeitung eines Axicons von unten in Fig. 6;
- Fig. 8: eine Rückansicht der in Fig. 5 gezeigten Vorrichtung zur Feinbearbeitung eines Axicons von links in Fig. 6;
- Fig. 9: eine im Maßstab gegenüber der Fig. 8 vergrößerte Schnittansicht der in Fig. 5 gezeigten Vorrichtung zur Feinbearbeitung eines Axicons - ohne das Spannfutter der Werkzeugspindel - entsprechend der Schnittverlaufslinie IX-IX in Fig. 8, wobei in einem unteren Teil der Fig. 9 illustriert ist, wie das Werkzeug an der Vorrichtung versetzt montiert werden kann;
- Fig. 10: bis Fig. 15 schematische Unteransichten der in Fig. 5 gezeigten Vorrichtung zur Feinbearbeitung eines Axicons, ähnlich der Unteransicht gemäß Fig. 7, die einen Teil der Möglichkeiten illustrieren, wie auf die axiale Lage und den Hub des gestrichelt angedeuteten Werkzeugs in Oszillationsrichtung Einfluss genommen werden kann;
- Fig. 16: eine perspektivische Ansicht eines anderen, im Wesentlichen leistenförmigen Werkzeugs für die in Fig. 5 gezeigte Vorrichtung zur Feinbearbeitung eines Axicons von schräg oben / vorne rechts;
- Fig. 17: eine Rückansicht des Werkzeugs gemäß Fig. 16 von hinten in Fig. 16;
- Fig. 18: eine Seitenansicht des Werkzeugs gemäß Fig. 16 von rechts in Fig. 17;
- Fig. 19: eine Draufsicht auf das Werkzeug gemäß Fig. 16 von oben in Fig. 17;
- Fig. 20: eine schematische Draufsicht auf ein konkaves Axicon, das mittels des in Fig. 5 gezeigten, im Wesentlichen dreieckigen Werkzeugs erfindungsgemäß bearbeitet wird;
- Fig. 21: eine schematische Schnittansicht des in Fig. 20 gezeigten konkaven Axicons / dreieckigen Werkzeugs entsprechend der Schnittverlaufslinie XXI-XXI in Fig. 20;
- Fig. 22: eine schematische Draufsicht auf ein konkaves Axicon, das mittels des in den Fig. 16 bis 19 gezeigten, im Wesentlichen leistenförmigen Werkzeugs erfindungsgemäß bearbeitet wird; und
- Fig. 23: eine schematische Schnittansicht des in Fig. 22 gezeigten konkaven Axicons / leistenförmigen Werkzeugs entsprechend der Schnittverlaufslinie XXIII-XXIII in Fig. 22.

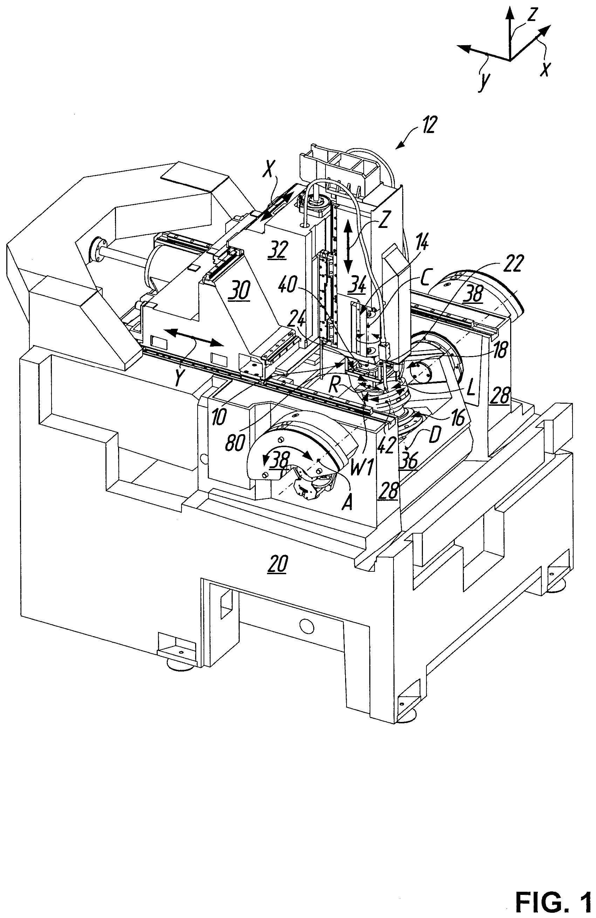

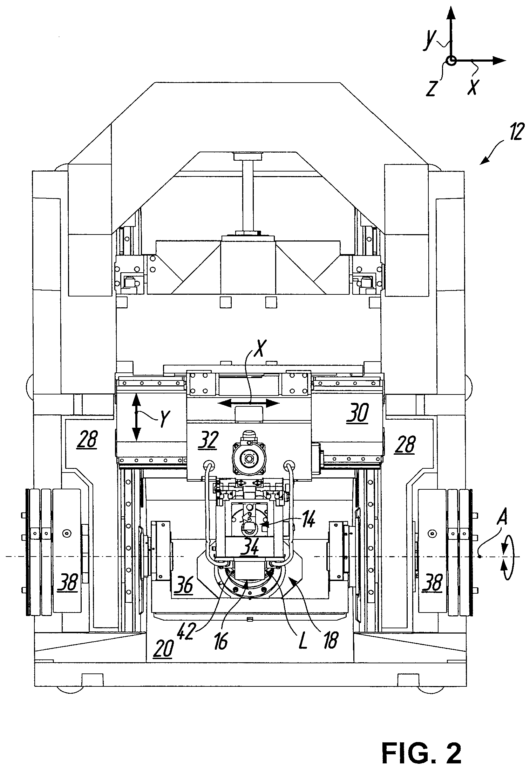

Zu den Zeichnungen sei an dieser Stelle noch angemerkt, dass die Darstellung der erfindungsgemäß ausgerüsteten Feinbearbeitungsmaschine in einem rechtwinkligen kartesischen Koordinatensystem erfolgt, in welchem der Buchstabe x die Breitenrichtung, der Buchstabe y die Längenrichtung und der Buchstabe z die Höhenrichtung der Feinbearbeitungsmaschine bezeichnet. In den Fig. 1 und 2 wurden zur Freigabe der Sicht auf wesentliche Bauteile bzw. Baugruppen der Feinbearbeitungsmaschine und zur Vereinfachung der Darstellung insbesondere die Bedieneinheit und Steuerung, Verkleidungsteile, Türmechanismen und Scheiben, Ablagen für Werkstücke und Werkzeuge, die Versorgungseinrichtungen (einschließlich Leitungen, Schläuche und Rohre) für Strom, Druckluft und Poliermittel, der Poliermittelrücklauf sowie die maschineninternen Mess-, Wartungs- und Sicherheitseinrichtungen weggelassen, weil sie für das Verständnis der Erfindung nicht erforderlich erscheinen und dem Fachmann ohnehin geläufig sind.

### DETAILLIERTE BESCHREIBUNG DER AUSFÜHRUNGSBEISPIELE

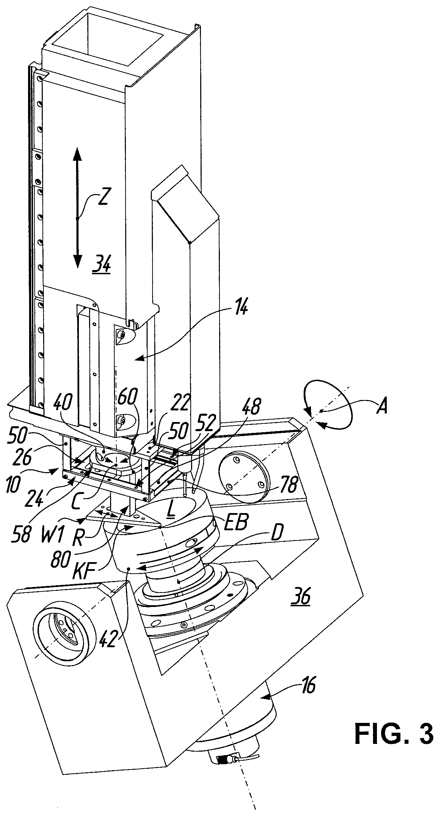

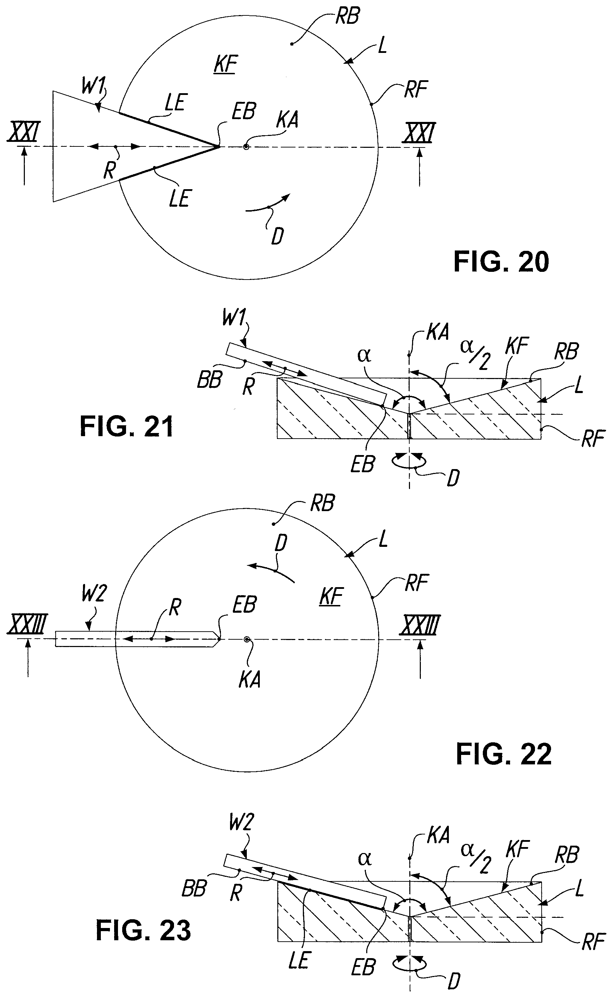

In den Fig. 1 und 2 ist - als ein möglicher Anwendungsfall bzw. Einsatzort einer weiter unten insbesondere unter Bezugnahme auf die Fig. 3 bis 15 noch im Detail erläuterten Vorrichtung 10 zur Feinbearbeitung eines Axicons L, das gemäß den Fig. 20 bis 23 wenigstens eine konkave (oder alternativ konvexe) Kegelfläche KF mit einer Kegelachse KA und einem Kegelwinkel α aufweist - eine CNC-gesteuerte Feinbearbeitungsmaschine, d.h. eine Maschine für die Schleif-, Feinschleif- und/oder Polierbearbeitung der Flächen und Ränder optischer Werkstücke allgemein mit dem Bezugszeichen 12 beziffert. Der Grundaufbau dieser Feinbearbeitungsmaschine 12 ist in dem deutschen Patent DE 100 29 967 B4 der vorliegenden Anmelderin ausführlich erläutert, weshalb die Feinbearbeitungsmaschine 12 nachfolgend nur insoweit beschrieben werden soll, als es für das Verständnis der vorliegenden Erfindung erforderlich erscheint. Im Übrigen sei an dieser Stelle im Hinblick auf Aufbau und Funktion der Feinbearbeitungsmaschine 12 zur Vermeidung von Wiederholungen ausdrücklich auf die Patentschrift DE 100 29 967 B4 Bezug genommen und verwiesen.

Die Feinbearbeitungsmaschine 12 besitzt allgemein eine Werkzeugspindel 14 mit einer drehzahlgesteuerten Werkzeug-Drehachse C und eine Werkstückspindel 16 mit einer im Drehwinkel geregelten Werkstück-Drehachse D. Die Werkzeugspindel 14 und die Werkstückspindel 16 ragen in einen Arbeitsraum 18 hinein, der von einem aus Polymerbeton geformten Maschinenbett 20 begrenzt ist. Dabei sind die Werkzeugspindel 14 und die Werkstückspindel 16 - wie nachfolgend ebenfalls noch näher beschrieben wird - (u.a.) in einer gedachten, durch die Werkzeug-Drehachse C und die Werkstück-Drehachse D aufgespannten Ebene Y-Z relativ zueinander lagegeregelt verfahrbar (Linearachse Y, Linearachse Z) sowie bezüglich einer Schwenkachse (A-Achse), die senkrecht zu der Ebene Y-Z verläuft, relativ zueinander im Drehwinkel geregelt verschwenkbar. An einem der Werkstückspindel 16 zugewandten Ende der Werkzeugspindel 14 ist die Vorrichtung 10 zur Feinbearbeitung von Axicons L montiert.

Zu diesem Zweck hat die Vorrichtung 10 allgemein eine Basis 22 oder Grundplatte, die angepasst ist, an der Werkzeugspindel 14 der Feinbearbeitungsmaschine 12 angeflanscht zu werden. An der Basis 22 ist eine Führungsanordnung 24 montiert, die einen entlang einer Oszillationsachse R oszillierend antreibbaren Werkzeugschlitten 26 längsbeweglich führt. Der Werkzeugschlitten 26 selbst trägt ein Werkzeug W1 bzw. W2 zur Feinbearbeitung von Axicons L.

Die Fig. 1 bis 15, 20 und 21 zeigen das Werkzeug W1 gemäß einer ersten Variante, bei der das Werkzeug W1 in einer Draufsicht gesehen im Wesentlichen die Form eines gleichschenkligen Dreiecks aufweist. Dieses Werkzeug W1 weist einen Bearbeitungsbereich BB auf, der an einer Spitze des Dreiecks ein vorderes Ende EB hat und auf voneinander abgewandten, langen Seiten des Dreiecks jeweils einen linienförmigen Eingriff LE (vgl. die Fig. 20) mit der zu bearbeiteten Kegelfläche KF des Axicons L gestattet.

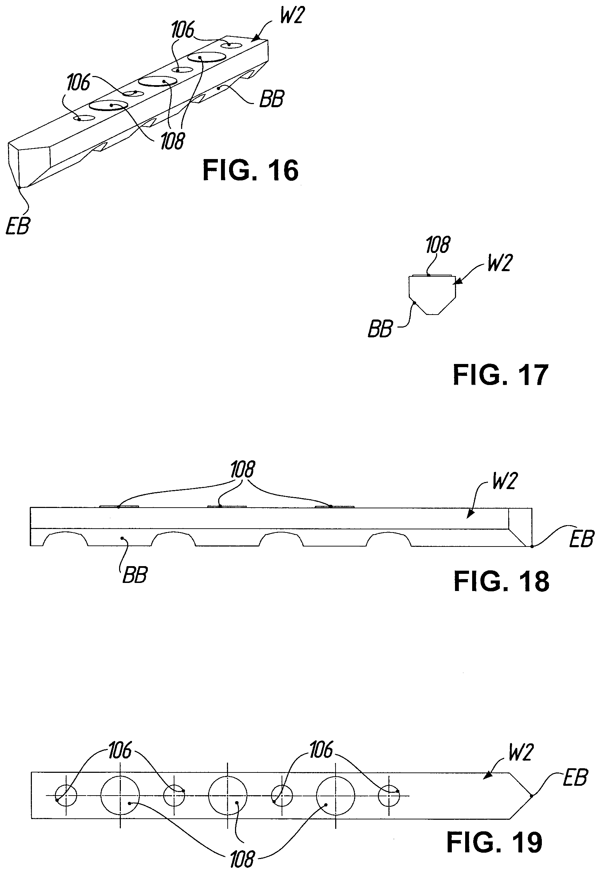

Die Fig. 16 bis 19, 22 und 23 hingegen zeigen das Werkzeug W2 gemäß einer zweiten Variante, bei der das Werkzeug W2 im Wesentlichen leistenförmig ist. Dieses Werkzeug W2 weist einen Bearbeitungsbereich BB auf, der an einer Querseite des Werkzeugs W2 ein vorderes Ende EB hat und entlang einer Längsseite des Werkzeugs W2 einen linienförmigen Eingriff LE (siehe die Fig. 23) mit der zu bearbeiteten Kegelfläche KF des Axicons L gestattet.

Neben der Möglichkeit eines linienförmigen Eingriffs LE des jeweiligen Bearbeitungsbereichs BB mit der zu bearbeiteten Kegelfläche KF des Axicons L ist den Werkzeugen W1 und W2 gemein, dass der jeweilige Bearbeitungsbereich BB mit einem handelsüblichen Poliermittelträger (in den Figuren nicht gezeigt) versehen ist. Bei dem Poliermittelträger kann es sich z.B. um eine sogenannte "Polierfolie" handeln, oder aber auch um einen geeigneten Schaumstoff mit oder ohne Trägermaterial, die bzw. der mit einem gewissen seitlichen Überstand unter Zuhilfenahme eines handelsüblichen Klebstoffs auf dem Bearbeitungsbereich BB des Werkzeugs W1, W2 aufgeklebt ist. Hier verwendbare Polierfolien sind beispielsweise aus Polyurethan (PUR) in einer Dicke von 0,5 bis 1,3 mm von der Fa. James H. Rhodes & Company, Vernon, USA erhältlich, während geeignete Schaumstoffe etwa von der Fa. Getzner Werkstoffe GmbH, Oberhaching, Deutschland bezogen werden können. Zum Festkleben dieser Poliermittelträger auf dem Bearbeitungsbereich BB des jeweiligen Werkzeugs W1, W2 eignet sich z.B. ein handelsüblicher Klebstoff der Marke Pattex^{®} von der Fa. Henkel AG & Co. KGaA, Düsseldorf, Deutschland.

Nach dieser allgemeinen Übersicht über die Feinbearbeitungsmaschine 12, die hieran montierte Vorrichtung 10 zur Feinbearbeitung von Axicons L und das damit bewegte Werkzeug W1, W2 ist zurückkommend auf die Fig. 1 und 2 zur Feinbearbeitungsmaschine 12 weiterhin festzuhalten, dass deren Maschinenbett 20 zwei parallele Seitenwandungen 28 aufweist, zwischen denen der Arbeitsraum 18 ausgebildet ist. Die Seitenwandungen 28 lagern ein Portal 30 auf, das in Längenrichtung y der Feinbearbeitungsmaschine 12 entlang der Linearachse Y lagegeregelt verfahrbar ist. An dem Portal 30 ist ein Horizontalschlitten 32 in Breitenrichtung x der Feinbearbeitungsmaschine 12 längsverschieblich geführt, der entlang der Linearachse X lagegeregelt verfahren werden kann. An dem Horizontalschlitten 32 wiederum ist ein Vertikalschlitten 34 in Höhenrichtung z der Feinbearbeitungsmaschine 12 längsverschieblich geführt, der entlang der Linearachse Z lagegeregelt verfahrbar ist und die Werkzeugspindel 14 trägt.

Was die Werkstückseite angeht, ist in dem Arbeitsraum 18 ein die Werkstückspindel 16 tragendes Joch 36 vorgesehen. Das Joch 36 ist an den Seitenwandungen 28 des Maschinenbetts 20 um die Schwenkachse A drehbar gelagert und kann mittels eines Torque-Motors und zugeordneter Bremse (in den Figuren nicht zu sehen) im Drehwinkel geregelt angetrieben bzw. gehalten werden. Zu beiden Seiten vorgesehene Gegengewichte 38 sorgen hierbei für einen Gewichtsausgleich für das Joch 36.

An den einander zugewandten Enden der Werkzeugspindel 14 und der Werkstückspindel 16 sind diese schließlich jeweils mit einem Spannfutter 40 bzw. 42 versehen, das beispielsweise in Hydro-Dehn-Bauweise ausgebildet sein kann. Mit dem Spannfutter 40 der Werkzeugspindel 14 kann in an sich bekannter Weise ein zylindrischer Schaft eines Werkzeugs (nicht gezeigt) gehalten werden. Das Spannfutter 42 der Werkstückspindel 16 ist dazu ausgebildet, ein optisches Werkstück, in der vorliegenden Anwendung ein Axicon L, an einer zylindrischen Randfläche RF des Axicons L (vgl. die Fig. 20 bis 23) zu fassen und zu halten.

Was die Kinematik der Feinbearbeitungsmaschine 12 angeht, ist insoweit für den Fachmann ersichtlich, dass werkzeugseitig das in den Arbeitsraum 18 hineinragende Ende der Werkzeugspindel 14 mittels der drei Linearachsen X, Y und Z im Arbeitsraum 18 räumlich bewegt und positioniert werden kann. Zudem kann das Spannfutter 40 mittels der Werkzeugspindel 14 um die Werkzeug-Drehachse C drehend angetrieben werden. Werkstückseitig kann das in den Arbeitsraum 18 hineinragende Ende der Werkstückspindel 16 mittels der Schwenkachse A bezüglich der Werkzeugspindel 14 definiert im Winkel angestellt bzw. verschwenkt werden. Darüber hinaus kann das Spannfutter 42 mittels der Werkstückspindel 16 um die Werkstück-Drehachse D drehend angetrieben und in der Winkellage positioniert werden.

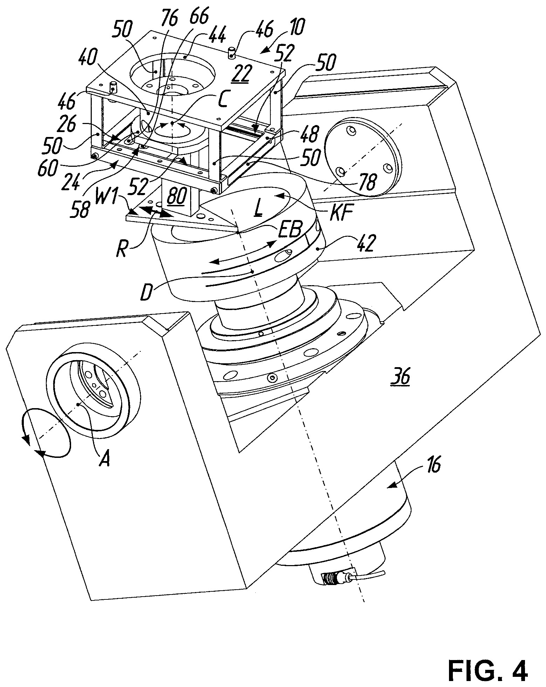

Weitere Details der Vorrichtung 10 zur Feinbearbeitung von Axicons L sind den Fig. 3 bis 9 zu entnehmen. Wie zunächst am besten in den Fig. 4, 5 und 9 zu erkennen ist, weist die Basis 22 ein kreisrundes Loch 44 auf, durch das sich im an der Werkzeugspindel 14 montierten Zustand der Vorrichtung 10 das arbeitsraumseitige Ende der Werkzeugspindel 14 mit dem Spannfutter 40 hindurch erstreckt. Die Oberseite der Basis 22 bildet hierbei eine ebene Flanschfläche aus, die von unten an ein Spindelgehäuse der Werkzeugspindel 14 angelegt werden kann. Zur Befestigung der Basis 22 an der Werkzeugspindel 14 sind im dargestellten Ausführungsbeispiel zwei Befestigungsschrauben 46 vorgesehen (siehe Fig. 4), die im montierten Zustand der Vorrichtung 10 zugeordnete Befestigungslöcher in der Basis 22 durchgreifen und in zugeordneten Gewindebohrungen (nicht gezeigt) im Spindelgehäuse der Werkzeugspindel 14 eingeschraubt sind.

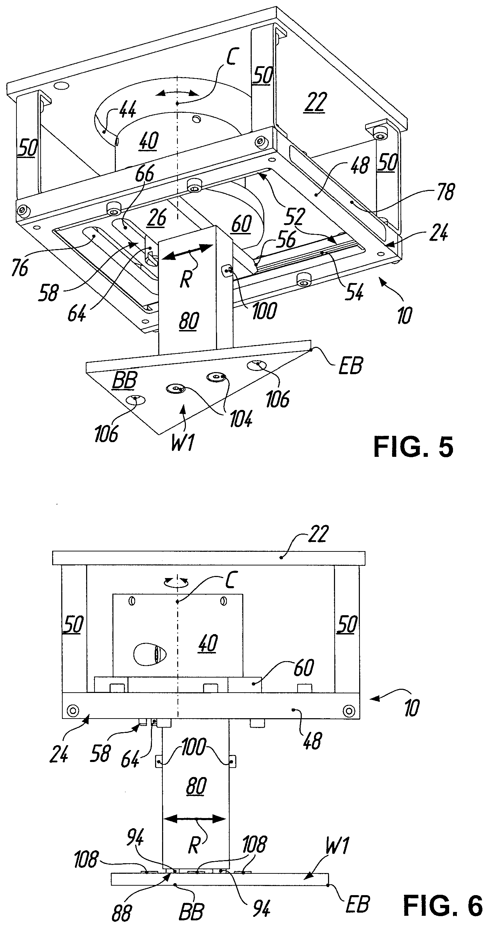

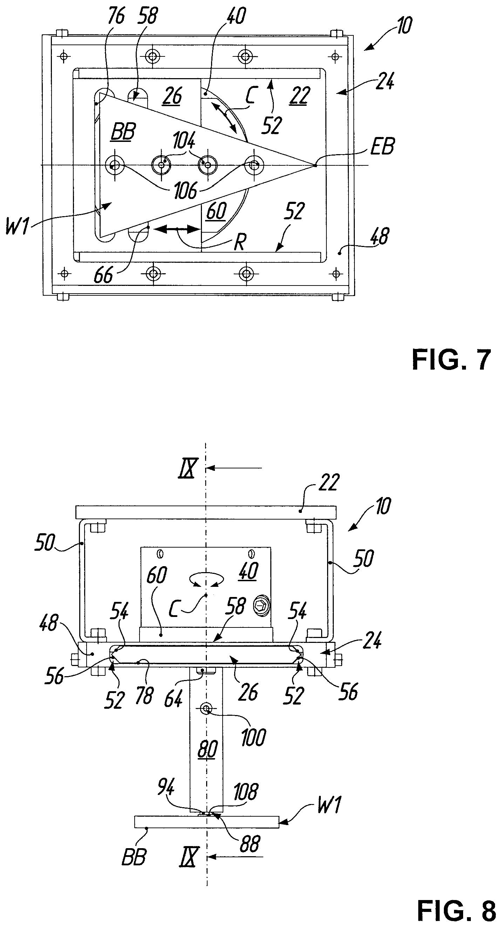

Die an der Basis 22 montierte Führungsanordnung 24 für den Werkzeugschlitten 26 weist einen in der Draufsicht gesehen rechteckigen Führungsrahmen 48 auf, der über an den Ecken des Führungsrahmens 48 angeordnete Befestigungswinkel 50 unter Zuhilfenahme von Schrauben an der Basis 22 befestigt ist, so dass sich der Führungsrahmen 48 parallel und mit Abstand zur Basis 22 erstreckt. An dem Führungsrahmen 48 sind auf einander gegenüberliegenden Seiten Führungsschienen 52 für den Werkzeugschlitten 26 mittels Schrauben angebracht. Wie am besten in den Fig. 5 und 8 zu erkennen ist, weisen die aus einem Gleitlagerwerkstoff bestehenden Führungsschienen 52 auf einander zugewandten Seiten jeweils eine im Wesentlichen V-förmige Nut 54 auf, während der Werkzeugschlitten 26 auf voneinander abgewandten Seiten jeweils einen keilförmigen Führungsabschnitt 56 besitzt, wobei die keilförmigen Führungsabschnitte 56 des Werkzeugschlittens 26 in den V-förmigen Nuten 54 der Führungsschienen 52 gleitfähig aufgenommen sind. Es ist ersichtlich, dass der Werkzeugschlitten 26 somit in dem Führungsrahmen 48 axial hin- und herbewegt werden kann (Oszillationsachse R).

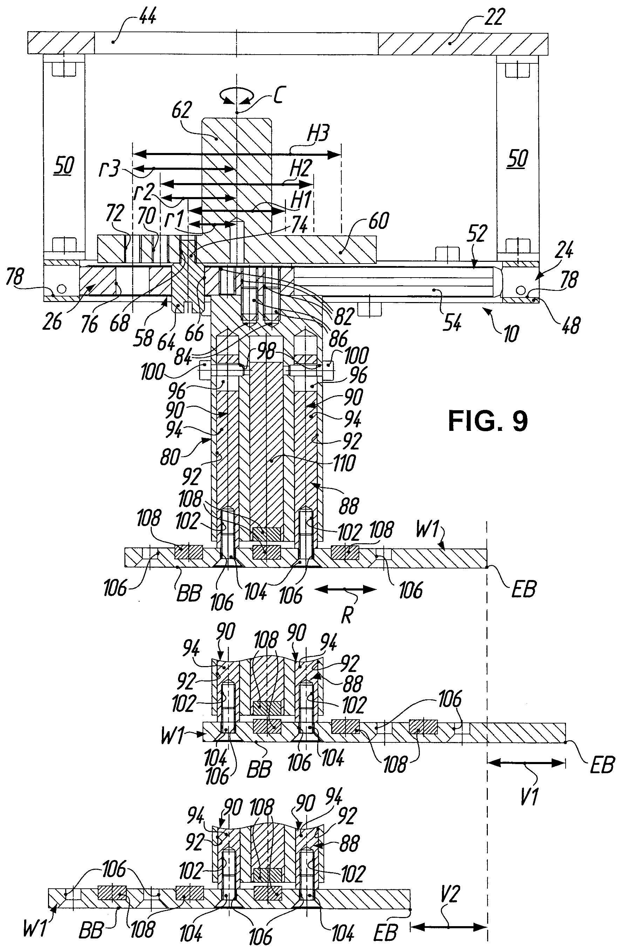

Im dargestellten Ausführungsbeispiel ist für den oszillierenden Antrieb des Werkzeugschlittens 26 ein Getriebemechanismus 58 vorgesehen, der angepasst ist, eine von der Werkzeugspindel 14 der Feinbearbeitungsmaschine 12 erzeugte Drehbewegung in eine hin- und hergehende Linearbewegung des Werkzeugschlittens 26 entlang der Oszillationsachse R umzusetzen. Hierfür ist der Getriebemechanismus 58 in der Art eines Exzenterantriebs ausgebildet und weist eine mit der Werkzeugspindel 14 der Feinbearbeitungsmaschine 12 antriebsverbindbare Rotationsscheibe 60 auf, die um eine Rotationsachse, hier die Werkzeug-Drehachse C drehbar ist. Wie die Fig. 9 zeigt, besitzt die Rotationsscheibe 60 einen zylindrischen Spannfortsatz 62 oder -zapfen, über den die Rotationsscheibe 60 am Spannfutter 40 der Werkzeugspindel 14 gespannt werden kann.

An der Rotationsscheibe 60 ist ein Führungsbolzen 64 bezüglich der Rotationsachse C radial versetzt angebracht, der in einem Schlitz 66 eingreift, welcher in dem Werkzeugschlitten 26 ausgebildet ist und sich quer zur Bewegungsrichtung des Werkzeugschlittens 26, also zur Oszillationsachse R erstreckt. Wie sich aus den Fig. 9 bis 13 ergibt, hat eine Mittelachse des Führungsbolzens 64 hierbei einen radialen Abstand r1 von der Rotationsachse C der Rotationsscheibe 60.

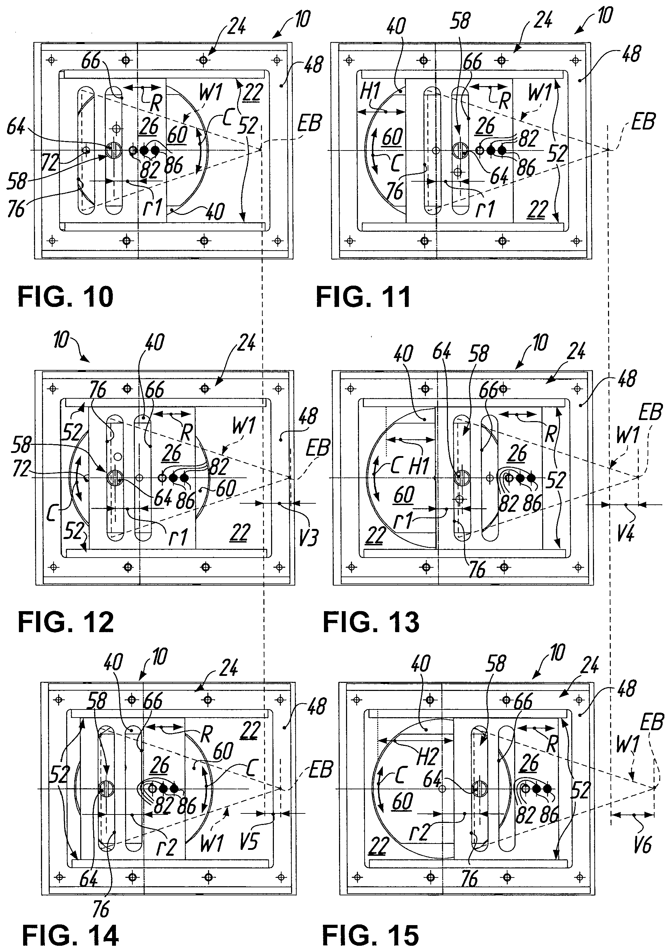

Die Fig. 10 und 11 veranschaulichen auch, was bei dieser Ausgestaltung des Getriebemechanismus 58 passiert, wenn sich die Rotationsscheibe 60 aus ihrer Drehwinkelstellung gemäß Fig. 10 um 180° um die Rotationsachse C dreht, so dass sie die Drehwinkelstellung gemäß Fig. 11 erreicht, und zwar wird hierbei der zwischen den Führungsschienen 52 der Führungsanordnung 24 zwangsgeführte Werkzeugschlitten 26 aufgrund des formschlüssigen Eingriffs des Führungsbolzens 64 mit dem Schlitz 66 des Werkzeugschlittens 26 von der in Fig. 10 dargestellten linken Axialposition des Werkzeugschlittens 26 im Führungsrahmen 48 um einen Hub H1 nach rechts in die in Fig. 11 dargestellte rechte Axialposition des Werkzeugschlittens 26 im Führungsrahmen 48 bewegt. Dabei ist der Hub H1 des Werkzeugschlittens 26 doppelt so groß wie der radiale Abstand r1 zwischen dem Führungsbolzen 64 und der Rotationsachse C der Rotationsscheibe 60.

Wenn die Rotationsscheibe 60 dann aus ihrer Drehwinkelstellung gemäß Fig. 11 um 180° um die Rotationsachse C weiter gedreht wird, so dass sie wieder ihre Drehwinkelstellung gemäß Fig. 10 erreicht, bewegt sich der Werkzeugschlitten 26 aufgrund des formschlüssigen Eingriffs des Führungsbolzens 64 mit dem Schlitz 66 von der in Fig. 11 dargestellten rechten Axialposition des Werkzeugschlittens 26 im Führungsrahmen 48 um den Hub H1 nach links zurück in die in Fig. 10 dargestellte linke Axialposition des Werkzeugschlittens 26 im Führungsrahmen 48. Es ist ersichtlich, dass auf diese Weise eine Rotation der Rotationsscheibe 60 um die Rotationsachse C im Führungsrahmen 48 eine oszillierende Hin- und Herbewegung des Werkzeugschlittens 26 mit einem vorbestimmten Hub H1 entlang der Oszillationsachse R erzwingt.

Wie am besten in Fig. 9 zu sehen ist, ist die Rotationsscheibe 60 im dargestellten Ausführungsbeispiel mit mehreren Befestigungsbohrungen 68, 70, 72 für den Führungsbolzen 64 versehen. Jede dieser Befestigungsbohrungen 68, 70, 72 ist hier als Gewindebohrung ausgeführt, in die der Führungsbolzen 64 mit einem Gewindefortsatz 74 eingeschraubt werden kann. Die Mittelachsen der Befestigungsbohrungen 68, 70, 72 haben einen unterschiedlichen radialen Abstand r1, r2 bzw. r3 zur Rotationsachse C, so dass sich durch Versetzen des Führungsbolzens 64 ein in Stufen einstellbarer Hub H1, H2 bzw. H3 des Werkzeugschlittens 26 im Führungsrahmen 48 ergibt.

Im dargestellten Ausführungsbeispiel ist der Werkzeugschlitten 26 darüber hinaus mit einem weiteren Schlitz 76 versehen, der sich parallel zu dem Schlitz 66 erstreckt. Der Führungsbolzen 64 kann wahlweise mit dem einen oder dem anderen Schlitz 66, 76 in Eingriff gebracht werden, wodurch eine axiale Relativlage des Werkzeugschlittens 26 bezüglich der Rotationsachse C der Rotationsscheibe 60 in zwei Stufen einstellbar ist.

Die Fig. 12 und 13 veranschaulichen dies im Vergleich zu den Fig. 10 und 11 für den Fall, dass der Führungsbolzen 64 an der Rotationsscheibe 60 nicht versetzt, d.h. mit seinem Gewindefortsatz 74 wieder in der Befestigungsbohrung 68 befestigt wird, dafür aber mit seinem freien Ende mit dem anderen Schlitz 76 im Werkzeugschlitten 26 in Eingriff gebracht wird. Auch in diesem Fall bewirkt eine Rotation der Rotationsscheibe 60 um die Rotationsachse C eine oszillierende Hin- und Herbewegung des Werkzeugschlittens 26 mit dem Hub H1 im Führungsrahmen 48 (siehe Fig. 13), dies allerdings mit axialen Endpositionen des Werkzeugschlittens 26, die von den axialen Endpositionen mit dem Schlitzeingriff gemäß den Fig. 10 und 11 verschieden sind. Hieraus ergibt sich für die zwei axialen Endpositionen des Werkzeugschlittens 26 - verglichen mit der Basiskonfiguration gemäß den Fig. 10 und 11 - jeweils ein Versatz V3 bzw. V4 des vorderen Endes EB des mit dem Werkzeugschlitten 26 antriebsverbundenen Werkzeugs W1, welches in den Fig. 10 bis 15 mit gestrichelten Linien angedeutet ist.

Eine Kombination der vorbeschriebenen Verstellmaßnahmen - Veränderung des Hubs H1, H2, H3 des Werkzeugschlittens 26 durch Versetzen des Führungsbolzens 64 in den Befestigungsbohrungen 68, 70, 72 der Rotationsscheibe 60, Veränderung der axialen Start- bzw. Umkehrpositionen des Werkzeugschlittens 26 im Führungsrahmen 48 durch Wahl eines anderen Schlitzes 66, 76 des Werkzeugschlittens 26 für den Eingriff mit dem Führungsbolzen 64 - ist in den Fig. 14 und 15 dargestellt. In diesem Fall befindet sich der Führungsbolzen 64 im Vergleich zu den Fig. 10 und 11 im Eingriff mit dem anderen Schlitz 76 des Werkzeugschlittens 26, ist verglichen mit den Fig. 12 und 13 zugleich aber auch in einer anderen Befestigungsbohrung 70 in der Rotationsscheibe 60 eingeschraubt. Damit ergeben sich gegenüber den Einstellungen gemäß den Fig. 10 bis 13 ein größerer Hub H2 und andere axiale Start- bzw. Umkehrpositionen des Werkzeugschlittens 26, wie aus einem "vertikalen" Vergleich der Fig. 10, 12 und 14 bzw. 11, 13 und 15 ersichtlich ist, die hierfür ausgefluchtete Führungsrahmen 48 zeigen. Es resultiert hier für die beiden axialen Endpositionen des Werkzeugschlittens 26 ein Versatz V5 bzw. V6 an dem vorderen Ende EB des Werkzeugs W1.

Zu erwähnen ist an dieser Stelle noch, dass der Führungsrahmen 48 an seinen kurzen Seiten mit schlitzartigen Öffnungen 78 versehen ist, die so dimensioniert sind, dass der Werkzeugschlitten 26 bei seiner Hin- und Herbewegung im Führungsrahmen 48 nach Maßgabe seines Hubs H1, H2, H3 und/oder seiner axialen Relativlage in Bezug auf die Rotationsachse C der Rotationsscheibe 60 ggf. in eine der Öffnungen 78 einzutauchen vermag, was in den Figuren indes nicht gezeigt ist.

Wie des Weiteren insbesondere der Fig. 9 zu entnehmen ist, ist auf der von der Rotationsscheibe 60 abgewandten Seite des Werkzeugschlittens 26 ein quaderförmiges Verbindungsteil 80 für das Werkzeug W1 bzw. W2 am Werkzeugschlitten 26 befestigt. Hierzu sind im Werkzeugschlitten 26 im dargestellten Ausführungsbeispiel drei Befestigungsbohrungen 82 mit einem Innengewinde ausgebildet, die mit gleichem Abstand voneinander entlang der Oszillationsachse R gesehen hintereinander liegen, während das Verbindungsteil 80 zwei zugeordnete Sackbohrungen 84 mit einem Innengewinde aufweist. In zwei benachbarten Befestigungsbohrungen 82 des Werkzeugschlittens 26 sind Madenschrauben 86 eingeschraubt, die sich bis in die Sackbohrungen 84 des Verbindungsteils 80 erstrecken, um das Verbindungsteil 80 am Werkzeugschlitten 26 zu fixieren.

Da drei - oder ggf. auch mehr - Befestigungsbohrungen 82 im Werkzeugschlitten 26 vorgesehen sind, kann das Verbindungsteil 80 in seiner axialen Lage entlang der Oszillationsachse R veränderbar am Werkzeugschlitten 26 befestigt werden. Dies hat wiederum einen Einfluss darauf, welche axiale Relativlage das Werkzeug W1 bzw. W2 entlang der Oszillationsachse R gesehen bezüglich der Rotationsachse C der Rotationsscheibe 60 einnimmt. In den Fig. 10 bis 15 sind die Madenschrauben 86 mit ausgefüllten Kreisen angedeutet; die axiale Lage des Verbindungsteils 80 bezüglich des Werkzeugschlittens 26 entspricht hier der in Fig. 9 gezeigten Konstellation.

In Fig. 9 ist auch zu erkennen, dass das Verbindungsteil 80 mit einer weiteren Führungsanordnung 88 versehen ist, die dazu dient, das Werkzeug W1, W2 in einer Richtung quer zur Oszillationsachse R des Werkzeugschlittens 26 beweglich zu führen. Die weitere Führungsanordnung 88 weist im dargestellten Ausführungsbeispiel zwei Führungszylinder 90 auf, die sich jeweils senkrecht zur Oszillationsachse R parallel zueinander erstrecken. Jeder Führungszylinder 90 umfasst hierbei eine als Sackbohrung ausgeführte Zylinderbohrung 92 im Verbindungsteil 80 und einen in der jeweiligen Zylinderbohrung 92 kolbenartig axial verschieblich aufgenommenen Zylinderstift 94.

An seinem dem Werkzeugschlitten 26 zugewandten Ende ist jeder Zylinderstift 94 mit einem Langloch 96 versehen. Nahe den geschlossenen Enden der Zylinderbohrungen 92 sind ferner quer zu den Zylinderbohrungen 92 verlaufende Gewindebohrungen 98 in das Verbindungsteil 80 eingebracht, in die jeweils eine Kopfschraube 100 eingeschraubt ist, die das Langloch 96 im zugeordneten Zylinderstift 94 durchgreift. Es ist ersichtlich, dass die Kombination von Langloch 96 und Kopfschraube 100 eine begrenzte Axialverschiebung des jeweiligen Zylinderstifts 94 in der zugeordneten Zylinderbohrung 92 gestattet, gleichwohl die Kopfschrauben 100 verhindern, dass die Zylinderstifte 94 aus den Zylinderbohrungen 92 herausgezogen werden können.

An seinem vom Werkzeugschlitten 26 abgewandten Ende weist jeder Zylinderstift 94 eine stirnseitig eingebrachte Sackbohrung 102 mit einem Innengewinde auf, in der eine hier als Senkkopfschraube ausgeführte Befestigungsschraube 104 für das Werkzeug W1 bzw. W2 eingeschraubt ist. Jedes Werkzeug W1 bzw. W2 hat mehrere, in den gezeigten Ausführungsbeispielen jeweils vier Schraublöcher 106, die in Längsrichtung des jeweiligen Werkzeugs W1 bzw. W2 mit gleichem Abstand zueinander auf einer Linie angeordnet sind. Somit kann das Werkzeug W1, W2 in seiner axialen Lage entlang der Oszillationsachse R veränderbar an der weiteren Führungsanordnung 88, genauer deren Zylinderstiften 94 montiert werden, wobei die Befestigungsschrauben 104 jeweils benachbarte Schraublöcher 106 im jeweiligen Werkzeug W1 bzw. W2 durchgreifen.

Diese weitere axiale Verstellmöglichkeit für das Werkzeug W1 bzw. W2 ist in Fig. 9 beispielhaft für das dreieckige Werkzeug W1 illustriert. Ausgehend von einer Basiskonfiguration, bei der das Werkzeug W1 vermittels der Befestigungsschrauben 104, die sich durch die mittleren Schraublöcher 106 des Werkzeugs W1 hindurch erstrecken, in einer mittleren Position an der Führungsanordnung 88 montiert ist, kann das Werkzeug W1 somit für eine bestimmte axiale Lage des Werkzeugschlittens 26 im Führungsrahmen 48 entlang der Oszillationsachse R gesehen weiter vorn (in Fig. 9 mittig gezeigt) oder weiter hinten (in Fig. 9 unten dargestellt) an der Führungsanordnung 88 befestigt werden. Hieraus resultiert - verglichen mit der Basiskonfiguration gemäß dem oberen Teil der Fig. 9 - ein Versatz V1 bzw. V2 an dem vorderen Ende EB des Werkzeugs W1.

Schließlich ist das jeweilige Werkzeug W1, W2 in der Richtung quer bzw. senkrecht zur Oszillationsachse R des Werkzeugschlittens 26 noch mit einer Kraft beaufschlagt, die das Werkzeug W1 bzw. W2 vom Verbindungsteil 80 wegdrückt. Im dargestellten Ausführungsbeispiel wird diese Kraft durch einander abstoßende Magneten 108 aufgebracht, die zwischen dem Verbindungsteil 80 und dem Werkzeug W1 bzw. W2 angeordnet sind. Bei der eigentlichen Polierbearbeitung sorgen diese Magneten 108 für einen nicht zu hohen Polierdruck am Bearbeitungsbereich BB des jeweiligen Werkzeugs W1, W2.

Genauer gesagt sind die Magneten 108 am jeweiligen Werkzeug W1 bzw. W2 auf dessen dem Werkzeugschlitten 26 zugewandten Seite zwischen den Schraublöchern 106 und auf einer Linie mit den Schraublöchern 106 angeordnet, wie in den Fig. 6, 8, 9 und 16 bis 19 zu erkennen ist. Am Verbindungsteil 80 ist ein Magnet 108 auf der dem jeweiligen Werkzeug W1 bzw. W2 zugewandten Stirnseite des Verbindungsteils 80 zwischen den Zylinderbohrungen 92 und auf einer Linie mit den Zylinderbohrungen 92 angeordnet, hier an einem Einsatz 110 im Verbindungsteil 80. In jedem Fall ist der jeweilige Magnet 108 in einer zugeordneten Aussparung aufgenommen und geeignet befestigt, beispielsweise mittels eines Klebstoffs.

Aus der Vorbeschreibung ist ersichtlich, dass unter Zuhilfenahme der mit einem der Werkzeuge W1, W2 ausgerüsteten Vorrichtung 10 und unter Einsatz von geometrisch unbestimmten Schneiden in Form von gebundenem oder losem Korn in Kombination mit einer Flüssigkeit an dem Bearbeitungsbereich BB des Werkzeugs W1 bzw. W2 ein Verfahren zur Feinbearbeitung eines Axicons L durchführbar ist, bei dem mittels des Werkzeugs W1 bzw. W2 an der Kegelfläche KF des Axicons L ein Materialabtrag durch eine relative Schnittgeschwindigkeit erzeugt wird, die sich alleine aus a) einer - hier mit der Werkstück-Drehachse D der Werkstückspindel 16 bewirkten - Drehbewegung des Axicons L um die Kegelachse KA und b) einer relativen oszillierenden Linearbewegung - hier erzeugt über die Oszillationsachse R der Vorrichtung 10 - des sich dabei im linienförmigen Eingriff LE mit der zu bearbeitenden Kegelfläche KF befindenden Werkzeugs W1 bzw. W2 ergibt, bei der sich das vordere Ende EB des Bearbeitungsbereichs BB in einer Draufsicht gesehen in bezüglich der Kegelachse KA radialer Richtung vor und zurück bewegt.

Dieser Werkzeugeingriff unter kombinierten Bewegungen von Werkzeug und Werkstück ist in den Fig. 20 und 21 für das dreieckige Werkzeug W1 sowie in den Fig. 22 und 23 für das leistenförmige Werkzeug W2 veranschaulicht, in beiden Fällen an einem Axicon L mit einer konkaven Kegelfläche KF. Durch die Verwendung dickerer Linien ist dabei in den Fig. 20 und 23 der linienförmige Eingriff LE des jeweiligen Werkzeugs W1 (hier doppelt, zu beiden Seiten des Werkzeugs W1) bzw. W2 (hier einfach, auf der Unterseite des Werkzeugs W2) mit der feinzubearbeitenden Kegelfläche KF des Axicons L verdeutlicht. Im Falle eines Axicons mit einer konvexen Kegelfläche käme das leistenförmige Werkzeug W2 mit seiner werkzeugunteren Berührlinie zum Einsatz, weil das dreieckige Werkzeug W1 eine konvexe Kegelfläche nicht wie in Fig. 20 gezeigt zu berühren vermag.

Bei Durchführung des vorbeschriebenen Verfahrens zur Feinbearbeitung eines Axicons L wird zunächst zwischen dem Axicon L und dem Werkzeug W1 bzw. W2 nach Maßgabe des Kegelwinkels α eine relative Ausricht- und Zustellbewegung erzeugt, infolge der der Bearbeitungsbereich BB des Werkzeugs W1 bzw. W2 mit der Kegelfläche KF des Axicons L in den linienförmigen Eingriff LE tritt, wobei das vordere Ende EB des Bearbeitungsbereichs BB der Kegelachse KA zugewandt ist. Für den Fachmann ist ersichtlich, dass die winkelmäßige Ausrichtbewegung mit der vorbeschriebenen Feinbearbeitungsmaschine 12 werkstückseitig vermittels der Schwenkachse A an dem die Werkstückspindel 16 tragenden Joch 36 erfolgt. Ebenso ist ersichtlich, dass die Zustellbewegung im Raum hingegen mit der vorbeschriebenen Feinbearbeitungsmaschine 12 werkzeugseitig über die drei der Werkzeugspindel 14 zugeordneten Linearachsen X, Y, Z erfolgt.

Ist der mittels der Magnete 108 am Verbindungsteil 80 und dem jeweiligen Werkzeug W1 bzw. W2 definiert "vorgespannte" linienförmige Eingriff LE zwischen dem Werkzeug W1 bzw. W2 und der feinzubearbeitenden Kegelfläche KF des Axicons L hergestellt, wird zwischen dem über die Werkstück-Drehachse D der Werkstückspindel 16 um die Kegelachse KA drehend angetriebenen Axicon L und dem Werkzeug W1 bzw. W2 vermittels der Werkzeugspindel 14, der daran gespannten Rotationsscheibe 60 und des Getriebemechanismus 58 der Vorrichtung 10 wie vorbeschrieben die relative oszillierende Linearbewegung (Oszillationsachse R) als Vorschubbewegung erzeugt, bei der sich das vordere Ende EB des Bearbeitungsbereichs BB während einer Umdrehung des Axicons L um die Kegelachse KA in der Draufsicht gesehen mehrfach über der Kegelfläche KF von einem äußeren Randbereich RB der Kegelfläche KF in bezüglich der Kegelachse KA radialer Richtung wenigstens bis nahe an die Kegelachse KA und wieder zurück bewegt.

Während der Feinbearbeitung der Kegelfläche KF können dann - über die Werkstückspindel 16 - eine Drehzahl des Axicons L um die Kegelachse KA und - vermittels geeigneter Drehzahlsteuerung der Werkzeugspindel 14 - eine Frequenz der relativen oszillierenden Linearbewegung (Oszillationsachse R) des Werkzeugs W1 bzw. W2 über der Kegelfläche KF derart aufeinander abgestimmt werden, dass die Anzahl der Hin- und Herbewegungen des Werkzeugs W1 bzw. W2 pro Umdrehung des Axicons L nicht geradzahlig ist. So kommt es zu einem fortlaufenden "Spurwechsel" des oszillierenden Werkzeugs W1 bzw. W2 auf der feinbearbeiteten Kegelfläche KF des sich drehenden Axicons L. Bei von den Erfindern durchgeführten Versuchen konnten sehr gute Feinbearbeitungsergebnisse mit einem Verhältnis von Frequenz zu Drehzahl erzielt werden, bei dem während der Feinbearbeitung der Kegelfläche KF die Anzahl der Hin- und Herbewegungen des Werkzeugs W1 bzw. W2 pro Umdrehung des Axicons L um die Kegelachse KA größer gleich 3 und kleiner gleich 7 war.

Auf die vorbeschriebene Art und Weise kann also die in den Fig. 1 und 2 gezeigte, an sich vorbekannte Feinbearbeitungsmaschine 12, an deren Werkzeugspindel 14 die oben ausführlich erläuterte Vorrichtung 10 montiert ist, für die Feinbearbeitung eines Axicons L, das wenigstens eine konkave oder konvexe Kegelfläche KF mit einer Kegelachse KA und einem Kegelwinkel α aufweist, verwendet werden.

Bei einem Verfahren zur Feinbearbeitung eines Axicons, das eine konkave oder konvexe Kegelfläche mit einer Kegelachse und einem Kegelwinkel aufweist, wird, unter Einsatz von geometrisch unbestimmten Schneiden in Form von gebundenem oder losem Korn in Kombination mit einer Flüssigkeit an einem Bearbeitungsbereich eines Werkzeugs, welcher für einen linienförmigen Eingriff mit der Kegelfläche ausgebildet ist und ein bezüglich der Kegelachse vorderes Ende hat, an der Kegelfläche ein Materialabtrag durch eine relative Schnittgeschwindigkeit erzeugt, die sich alleine aus einer Drehbewegung des Axicons um die Kegelachse und einer relativen oszillierenden Linearbewegung (Oszillationsachse) des Werkzeugs ergibt, bei der sich der Bearbeitungsbereich im linienförmigen Eingriff mit der Kegelfläche befindet und sich sein vorderes Ende in einer Draufsicht gesehen in bezüglich der Kegelachse radialer Richtung vor und zurück bewegt. Ferner wird eine für dieses Verfahren einsetzbare Vorrichtung offenbart, die an einer Werkzeugspindel einer Feinbearbeitungsmaschine montierbar ist.

### BEZUGSZEICHENLISTE

- 10: Vorrichtung zur Feinbearbeitung von Axicons
- 12: Feinbearbeitungsmaschine
- 14: Werkzeugspindel
- 16: Werkstückspindel
- 18: Arbeitsraum
- 20: Maschinenbett
- 22: Basis
- 24: Führungsanordnung
- 26: Werkzeugschlitten
- 28: Seitenwandung
- 30: Portal
- 32: Horizontalschlitten
- 34: Vertikalschlitten
- 36: Joch
- 38: Gegengewicht
- 40: Spannfutter
- 42: Spannfutter
- 44: Loch
- 46: Befestigungsschraube
- 48: Führungsrahmen
- 50: Befestigungswinkel
- 52: Führungsschiene
- 54: V-förmige Nut
- 56: keilförmiger Führungsabschnitt
- 58: Getriebemechanismus
- 60: Rotationsscheibe
- 62: Spannfortsatz
- 64: Führungsbolzen
- 66: Schlitz
- 68: Befestigungsbohrung
- 70: Befestigungsbohrung
- 72: Befestigungsbohrung
- 74: Gewindefortsatz
- 76: Schlitz
- 78: Öffnung
- 80: Verbindungsteil
- 82: Befestigungsbohrung
- 84: Sackbohrung
- 86: Madenschraube
- 88: Führungsanordnung
- 90: Führungszylinder
- 92: Zylinderbohrung
- 94: Zylinderstift
- 96: Langloch
- 98: Gewindebohrung
- 100: Kopfschraube
- 102: Sackbohrung
- 104: Befestigungsschraube
- 106: Schraubloch
- 108: Magnet
- 110: Einsatz

- r1: radialer Abstand
- r2: radialer Abstand
- r3: radialer Abstand
- x: Breitenrichtung
- y: Längenrichtung
- z: Höhenrichtung

- α: Kegelwinkel

- A: Schwenkachse Werkstück (im Drehwinkel geregelt)
- BB: Bearbeitungsbereich
- C: Werkzeug-Drehachse (drehzahlgesteuert) / Rotationsachse
- D: Werkstück-Drehachse (im Drehwinkel geregelt)
- EB: vorderes Ende
- H1: Hub
- H2: Hub
- H3: Hub
- KA: Kegelachse
- KF: Kegelfläche
- L: Linse / Axicon
- LE: linienförmiger Eingriff
- R: Oszillationsachse
- RB: Randbereich
- RF: Randfläche
- V1: Versatz
- V2: Versatz
- V3: Versatz
- V4: Versatz
- V5: Versatz
- V6: Versatz
- W1: dreieckiges Werkzeug
- W2: leistenförmiges Werkzeug
- X: Linearachse Werkzeug (lagegeregelt)
- Y: Linearachse Werkzeug (lagegeregelt)
- Z: Linearachse Werkzeug (lagegeregelt)

## Patentansprüche

1. Verfahren zur Feinbearbeitung eines Axicons (L),
das wenigstens eine konkave oder konvexe Kegelfläche (KF) mit einer Kegelachse (KA) und einem Kegelwinkel (α) aufweist,
mittels eines Werkzeugs (W1, W2), welches einen Bearbeitungsbereich (BB) für einen linienförmigen Eingriff (LE) mit der zu bearbeitenden Kegelfläche (KF) besitzt, der ein bezüglich der Kegelachse (KA) vorderes Ende (EB) hat,
unter Einsatz von geometrisch unbestimmten Schneiden in Form von gebundenem oder losem Korn in Kombination mit einer Flüssigkeit an dem Bearbeitungsbereich (BB) des Werkzeugs (W1, W2),
wobei mittels des Werkzeugs (W1, W2) an der Kegelfläche (KF) des Axicons (L) ein Materialabtrag durch eine relative Schnittgeschwindigkeit erzeugt wird, die sich alleine aus einer Drehbewegung (D) des Axicons (L) um die Kegelachse (KA) und einer relativen oszillierenden Linearbewegung (Oszillationsachse R) des sich dabei im linienförmigen Eingriff (LE) mit der zu bearbeitenden Kegelfläche (KF) befindenden Werkzeugs (W1, W2) ergibt, bei der sich das vordere Ende (EB) des Bearbeitungsbereichs (BB) in einer Draufsicht gesehen in bezüglich der Kegelachse (KA) radialer Richtung vor und zurück bewegt.

2. Verfahren zur Feinbearbeitung eines Axicons (L) nach Anspruch 1,
wobei zwischen dem Axicon (L) und dem Werkzeug (W1, W2) nach Maßgabe des Kegelwinkels (α) zunächst eine relative Ausricht- und Zustellbewegung erzeugt wird, infolge der der Bearbeitungsbereich (BB) des Werkzeugs (W1, W2) mit der Kegelfläche (KF) des Axicons (L) in den linienförmigen Eingriff (LE) tritt, wobei das vordere Ende (EB) des Bearbeitungsbereichs (BB) der Kegelachse (KA) zugewandt ist, worauf zwischen dem um die Kegelachse (KA) drehend angetriebenen (Werkstück-Drehachse D) Axicon (L) und dem Werkzeug (W1, W2) die relative oszillierende Linearbewegung (Oszillationsachse R) als Vorschubbewegung erzeugt wird, bei der sich das vordere Ende (EB) des Bearbeitungsbereichs (BB) während einer Umdrehung des Axicons (L) um die Kegelachse (KA) in der Draufsicht gesehen mehrfach über der Kegelfläche (KF) von einem äußeren Randbereich (RB) der Kegelfläche (KF) in bezüglich der Kegelachse (KA) radialer Richtung wenigstens bis nahe an die Kegelachse (KA) und wieder zurück bewegt, und/oder
wobei während der Feinbearbeitung der Kegelfläche (KF) eine Drehzahl des Axicons (L) um die Kegelachse (KA) und eine Frequenz der relativen oszillierenden Linearbewegung (Oszillationsachse R) des Werkzeugs (W1, W2) über der Kegelfläche (KF) derart aufeinander abgestimmt sind, dass die Anzahl der Hin- und Herbewegungen des Werkzeugs (W1, W2) pro Umdrehung des Axicons (L) nicht geradzahlig ist.

3. Verfahren zur Feinbearbeitung eines Axicons (L) nach Anspruch 2, wobei während der Feinbearbeitung der Kegelfläche (KF) die Anzahl der Hin- und Herbewegungen des Werkzeugs (W1, W2) pro Umdrehung des Axicons (L) um die Kegelachse (KA) größer gleich 3 und kleiner gleich 7 ist.

4. Vorrichtung (10) zur Feinbearbeitung eines Axicons (L), das wenigstens eine konkave oder konvexe Kegelfläche (KF) mit einer Kegelachse (KA) und einem Kegelwinkel (α) aufweist, mit einem Werkzeug (W1, W2), welches einen Bearbeitungsbereich (BB) für einen linienförmigen Eingriff (LE) mit der zu bearbeitenden Kegelfläche (KF) besitzt, umfassend
eine Basis (22), die angepasst ist, an einer Werkzeugspindel (14) einer Feinbearbeitungsmaschine (12) angeflanscht zu werden,
eine an der Basis (22) montierte Führungsanordnung (24), die einen entlang einer Oszillationsachse (R) oszillierend antreibbaren Werkzeugschlitten (26) längsbeweglich führt, der das Werkzeug (W1, W2) zur Feinbearbeitung des Axicons (L) trägt,
einen Getriebemechanismus (58), der angepasst ist, eine von der Werkzeugspindel (14) erzeugte Drehbewegung in eine hin- und hergehende Linearbewegung des Werkzeugschlittens (26) entlang der Oszillationsachse (R) umzusetzen, und hierfür eine mit der Werkzeugspindel (14) antriebsverbindbare Rotationsscheibe (60) aufweist, die um eine Rotationsachse (C) drehbar ist und an der ein Führungsbolzen (64) bezüglich der Rotationsachse (C) radial versetzt angebracht ist, der in einem Schlitz (66, 76) eingreift, welcher sich quer zur Oszillationsachse (R) erstreckend in dem Werkzeugschlitten (26) ausgebildet ist, so dass der Werkzeugschlitten (26) mit einem vorbestimmten Hub (H1, H2, H3) entlang der Oszillationsachse (R) oszillierend antreibbar ist,
wobei die Rotationsscheibe (60) mit mehrere Befestigungsbohrungen (68, 70, 72) für den Führungsbolzen (64) versehen ist, die einen unterschiedlichen radialen Abstand (r1, r2, r3) zur Rotationsachse (C) haben, so dass der Hub (H1, H2, H3) des Werkzeugschlittens (26) einstellbar ist, und/oder
wobei der Werkzeugschlitten (26) wenigstens zwei sich parallel zueinander erstreckende Schlitze (66, 76) für den wahlweisen Eingriff des Führungsbolzens (64) aufweist, über die eine axiale Relativlage des Werkzeugschlittens (26) bezüglich der Rotationsachse (C) einstellbar ist.

5. Vorrichtung (10) nach Anspruch 4, wobei die Führungsanordnung (24) einen Führungsrahmen (48) aufweist, an dem auf einander gegenüberliegenden Seiten Führungsschienen (52) für den Werkzeugschlitten (26) angebracht sind.

6. Vorrichtung (10) nach Anspruch 5, wobei die aus einem Gleitlagerwerkstoff bestehenden Führungsschienen (52) auf einander zugewandten Seiten jeweils eine V-förmige Nut (54) aufweisen, wobei der Werkzeugschlitten (26) auf voneinander abgewandten Seiten jeweils einen keilförmigen Führungsabschnitt (56) besitzt, und wobei die keilförmigen Führungsabschnitte (56) des Werkzeugschlittens (26) in den V-förmigen Nuten (54) der Führungsschienen (52) gleitfähig aufgenommen sind.

7. Vorrichtung (10) nach einem der Ansprüche 4 bis 6, wobei an dem Werkzeugschlitten (26) ein Verbindungsteil (80) mit einer weiteren Führungsanordnung (88) angebracht ist, die dazu dient, das Werkzeug (W1, W2) in einer Richtung quer zur Oszillationsachse (R) des Werkzeugschlittens (26) beweglich zu führen, und wobei das Werkzeug (W1, W2) in der Richtung quer zur Oszillationsachse (R) des Werkzeugschlittens (26) mit einer Kraft beaufschlagt ist, die das Werkzeug (W1, W2) vom Verbindungsteil (80) wegdrückt.

8. Vorrichtung (10) nach Anspruch 7,
wobei die Kraft durch wenigstens zwei einander abstoßende Magneten (108) aufgebracht ist, die zwischen dem Verbindungsteil (80) und dem Werkzeug (W1, W2) angeordnet sind, und/oder
wobei die weitere Führungsanordnung (88) wenigstens einen Führungszylinder (90) aufweist und/oder
wobei das Verbindungsteil (80) in seiner axialen Lage entlang der Oszillationsachse (R) veränderbar am Werkzeugschlitten (26) befestigt ist und/oder
wobei das Werkzeug (W1, W2) in seiner axialen Lage entlang der Oszillationsachse (R) veränderbar an der weiteren Führungsanordnung (88) montiert ist.

9. Vorrichtung (10) nach einem der Ansprüche 4 bis 8,
wobei das Werkzeug (W1) in einer Draufsicht gesehen im Wesentlichen die Form eines gleichschenkligen Dreiecks aufweist, mit einem Bearbeitungsbereich (BB), der an einer Spitze des Dreiecks ein vorderes Ende (EB) hat und auf voneinander abgewandten, langen Seiten des Dreiecks jeweils einen linienförmigen Eingriff (LE) mit der zu bearbeiteten Kegelfläche (KF) des Axicons (L) gestattet, oder
wobei das Werkzeug (W2) im Wesentlichen leistenförmig ist, mit einem Bearbeitungsbereich (BB), der an einer Querseite des Werkzeugs (W2) ein vorderes Ende (EB) hat und entlang einer Längsseite des Werkzeugs (W2) einen linienförmigen Eingriff (LE) mit der zu bearbeiteten Kegelfläche (KF) des Axicons (L) gestattet.

10. Feinbearbeitungsmaschine (12), umfassend eine Werkzeugspindel (14) mit einer Werkzeug-Drehachse (C) und eine Werkstückspindel (16) mit einer Werkstück-Drehachse (D), die in einen von einem Maschinenbett (20) begrenzten Arbeitsraum (18) hineinragen und wenigstens in einer gedachten, durch die Werkzeug-Drehachse (C) und die Werkstück-Drehachse (D) aufgespannten Ebene (Y-Z) relativ zueinander verfahrbar (Y-Achse, Z-Achse) sowie bezüglich einer Schwenkachse (A-Achse), die senkrecht zu der Ebene (Y-Z) verläuft, relativ zueinander verschwenkbar sind, wobei an einem der Werkstückspindel (16) zugewandten Ende der Werkzeugspindel (14) eine Vorrichtung (10) zur Feinbearbeitung eines Axicons (L) nach einem der Ansprüche 4 bis 9 montiert ist.

11. Feinbearbeitungsmaschine (12) nach Anspruch 10, wobei das Maschinenbett (20) zwei Seitenwandungen (28) aufweist, zwischen denen der Arbeitsraum (18) ausgebildet ist und die ein in einer Längsrichtung (Y-Achse) verfahrbares Portal (30) auflagern, an dem die Werkzeugspindel (14) wenigstens in einer zur Längsrichtung (Y-Achse) senkrechten Richtung (Z-Achse) verfahrbar geführt ist, und wobei in dem Arbeitsraum (18) ein die Werkstückspindel (16) tragendes Joch (36) vorgesehen ist, welches an den Seitenwandungen (28) um die Schwenkachse (A) drehbar gelagert ist.

12. Verwendung einer Feinbearbeitungsmaschine (12) nach Anspruch 10 oder 11, an deren Werkzeugspindel (14) eine Vorrichtung (10) nach einem der Ansprüche 4 bis 9 montiert ist, für die Feinbearbeitung eines Axicons (L), das wenigstens eine konkave oder konvexe Kegelfläche (KF) mit einer Kegelachse (KA) und einem Kegelwinkel (α) aufweist.

## Claims

1. Method for fine-processing of an axicon (L),
which has at least one concave or convex cone surface (KF) with a cone axis (KA) and a cone angle (α),
by means of a tool (W1, W2) which has a processing region (BB) for linear engagement (LE) with the cone surface (KF) to be processed, the processing region having a front end (EB) with respect to the cone axis (KA),
with use of geometrically indeterminate cutting edges in the form of bound or loose grain in combination with a liquid at the processing region (BB) of the tool (W1, W2),
wherein material removal is produced by means of the tool (W1, W2) at the cone surface (KF) of the axicon (L) by a relative cutting speed resulting solely from a rotational movement (D) of the axicon (L) about the cone axis (KA) and a relative oscillating linear movement (oscillation axis R) of the tool (W1, W2) that in this case is disposed in linear engagement (LE) with the cone surface (KF) to be processed, in which the front end (EB) of the processing region (BB) as seen in a plan view moves back and forth in a direction radial with respect to the cone axis (KA).

2. Method for fine-processing of an axicon (L) according to claim 1,
wherein initially a relative aligning and adjusting movement is produced between the axicon (L) and the tool (W1, W2) in accordance with the cone angle (α), as a consequence of which the processing region (BB) of the tool (W1, W2) comes into the linear engagement (LE) with the cone surface (KF) of the axicon (L), wherein the front end (EB) of the processing region (BB) faces the cone axis (KA), whereupon the relative oscillating linear movement (oscillation axis R) is produced between the axicon (L), which is driven to rotate about the cone axis (KA) (workpiece axis D of rotation), and the tool (W1, W2) as an advance movement in which the front end (EB) of the processing region (BB) during one revolution of the axicon (L) about the cone axis (KA) moves as seen in plan view multiple times over the cone surface (KF) in radial direction with respect to the cone axis (KA) from an outer edge region (RB) of the cone surface (KF) to at least the proximity of the cone axis (KA) and back again, and/or
wherein during the fine-processing of the cone surface (KF) a rotational speed of the axicon (L) about the cone axis (KA) and a frequency of the relative oscillating linear movement (oscillation axis R) of the tool (W1, W2) over the cone surface (KF) are so matched to one another that the number of reciprocating movements of the tool (W1, W2) per revolution of the axicon (L) is an uneven number.

3. Method for fine-processing of an axicon (L) according to claim 2, wherein during the fine-processing of the cone surface (KF) the number of reciprocating movements of the tool (W1, W2) per revolution of the axicon (L) about the cone axis (KA) is greater than or equal to three and smaller than or equal to seven.

4. Device (10) for fine-processing of an axicon (L), which has at least one concave or convex cone surface (KF) with a cone axis (KA) and a cone angle (α), by a tool (W1, W2) having a processing region (BB) for linear engagement (LE) with the cone surface (KF) to be processed, comprising
a base (22), which is adapted to be flange-mounted on a tool spindle (14) of a fine-processing machine (12),
a guide arrangement (24) mounted on the base (22) and guiding a tool carriage (26), which is drivable for oscillation along an oscillation axis (R) and which carries the tool (W1, W2) for fine-processing of the axicon (L), to be longitudinally movable,
a transmission mechanism (58), which adapted to convert a rotational movement produced by the tool spindle (14) into a reciprocating linear movement of the tool carriage (26) along the oscillation axis (R), and which comprises for this purpose a rotary disc (60), which is drivably connectable with the tool spindle (14) and is rotatable about an axis (C) of rotation and on which a guide pin (64) is mounted to be radially offset with respect to the axis (C) of rotation, the pin engaging in a slot (66, 76) which is formed to extend in the tool carriage (26) transversely to the oscillation axis (R) so that the tool carriage (26) is drivable to oscillate along the oscillation axis (R) with a predetermined stroke (H1, H2, H3),
wherein the rotary disc (60) is provided with a plurality of securing bores (68, 70, 72) for the guide pin (64), the bores having a different radial spacing (r1, r2, r3) from the axis (C) of rotation so that the stroke (H1, H2, H3) of the tool carriage (26) is settable, and/or
wherein the tool carriage (26) has at least two mutually parallely extending slots (66, 76) for selectable engagement of the guide pin (64), by way of which an axial relative position of the tool carriage (26) with respect to the axis (C) of rotation is settable.

5. Device (10) according to claim 4, wherein the guide arrangement (24) comprises a guide frame (48) on which guide rails (52) for the tool carriage (26) are mounted on mutually opposite sides.

6. Device (10) according to claim 5, wherein the guide rails (52) consist of a slide bearing material and have a respective V-shaped groove (54) on each of mutually facing sides, wherein the tool carriage (26) on each of mutually remote sides has a respective wedge-shaped guide section (56), and wherein the wedge-shaped guide sections (56) of the tool carriage (26) are received in the V-shaped grooves (54) of the guide rails (52) to be capable of sliding.

7. Device (10) according to any one of claims 4 to 6, wherein a connecting part (80) with a further guide arrangement (88) is mounted on the tool carriage (26) and serves for guiding the tool (W1, W2) to be movable in a direction transverse to the oscillation axis (R) of the tool carriage (26), and wherein the tool (W1, W2) is loaded in the direction transverse to the oscillation axis (R) of the tool carriage (26) by a force urging the tool (W1, W2) away from the connecting part (80).

8. Device (10) according to claim 7,
wherein the force is supplied by at least two mutually repelling magnets (108) arranged between the connecting part (80) and the tool (W1, W2), and/or
wherein the further guide arrangement (88) comprises at least one guide cylinder (90), and/or
wherein the connecting part (80) is secured to the tool carriage (26) to be variable in its axial position along the oscillation axis (R), and/or
wherein the tool (W1, W2) is mounted on the further guide arrangement (88) to be variable in its axial position along the oscillation axis (R).

9. Device (10) according to any one of claims 4 to 8,
wherein the tool (W1) as seen in plan view has substantially the form of an isosceles triangle, with a processing region (BB) which has a front end (EB) at a tip of the triangle and which on each of mutually opposite longitudinal sides of the triangle allows for respective linear engagement (LE) with the cone surface (KF) to be processed of the axicon (L), or
wherein the tool (W2) is substantially strip-shaped with a processing region (BB) which has a front end (EB) at a transverse side of the tool (W2) and which along a longitudinal side of the tool (W2) allows for linear engagement (LE) with the cone surface (KF) to be processed of the axicon (L).

10. Fine-processing machine (12), comprising a tool spindle (14) with a tool axis (C) of rotation and a workpiece spindle (16) with a workpiece axis (D) of rotation, which project into a work space (18) bounded by a machine bed (20) and which are movable relative to one another (Y axis, Z axis) at least in a notional plane (Y-Z) spanned by the tool axis (C) of rotation and the workpiece axis (D) of rotation as well as pivotable relative to one another with respect to a pivot axis (A axis) extending perpendicularly to the plane (Y-Z), wherein a device (10) for fine-processing of an axicon (L) according to any one of claims 4 to 9 is mounted on an end of the tool spindle (14) facing the workpiece spindle (16).

11. Fine-processing machine (12) according to claim 10, wherein the machine bed (20) has two side walls (28) between which the work space (18) is formed and which mount a portal (30), which is movable in a longitudinal direction (Y axis) and at which the tool spindle (14) is guided to be movable at least in a direction (Z axis) perpendicular to the longitudinal direction (Y axis), and wherein a yoke (36) is provided in the work space (18), which carries the workpiece spindle (16) and is mounted on the side walls (28) to be rotatable about the axis (A) of pivotation.

12. Use of a fine-processing machine (12) according to claim 10 or 11, on the tool spindle (14) of which a device (10) according to any one of claims 4 to 9 is mounted, for fine-processing of an axicon (L) having at least one concave or convex cone surface (KF) with a cone axis (KA) and a cone angle (α).

## Revendications

1. Procédé pour l'usinage de précision d'un axicon (L)
qui présente au moins une surface conique concave ou convexe (KF) avec un axe conique (KA) et un angle conique (α)
au moyen d'un outil (W1, W2) qui possède une zone d'usinage (BB) pour une prise linéaire (LE) avec la surface conique (KF) à usiner, qui présente une extrémité avant (EB) par rapport à l'axe conique (KA),
en utilisant des coupes géométriquement indéterminées sous forme de grains liés ou libres en combinaison avec un liquide sur la zone d'usinage (BB) de l'outil (W1, W2),
un enlèvement de matière étant produit à l'aide de l'outil (W1, W2) sur la surface conique (KF) de l'axicon (L) par une vitesse de coupe relative qui résulte uniquement d'un mouvement de rotation (D) de l'axicon (L) autour de l'axe conique (KA) et d'un mouvement linéaire oscillant relatif (axe d'oscillation R) de l'outil (W1, W2) se trouvant alors en prise linéaire (LE) avec la surface conique (KF) à usiner, dans lequel l'extrémité avant (EB) de la zone d'usinage (BB), vue de dessus, se déplace dans une direction radiale par rapport à l'axe conique (KA) vers l'avant et vers l'arrière.

2. Procédé d'usinage de précision d'un axicon (L) selon la revendication 1
dans lequel, entre l'axicon (L) et l'outil (W1, W2), un mouvement relatif de sortie et d'avance est d'abord généré en fonction de l'angle conique (α), à la suite de quoi la zone d'usinage (BB) de l'outil (W1, W2) entre en prise linéaire (LE) avec la surface conique (KF) de l'axicon (L), l'extrémité avant (EB) de la zone d'usinage (BB) étant tournée vers l'axe conique (KA), après quoi, entre l'axicon (L) entraîné en rotation autour de l'axe conique (KA) (axe de rotation de la pièce D) et l'outil (W1, W2), le mouvement linéaire oscillant relatif (axe d'oscillation R) est généré en tant que mouvement d'avance, dans lequel l'extrémité avant (EB) de la zone d'usinage (BB) se déplace, pendant une rotation de l'axicon (L) autour de l'axe conique (KA), vue de dessus, plusieurs fois au-dessus de la surface conique (KF) depuis une zone de bordure extérieure (RB) de la surface conique (KF) dans une direction radiale par rapport à l'axe conique (KA) au moins jusqu'à proximité de l'axe conique (KA) et revient en arrière, et/ou
pendant l'usinage de précision de la surface conique (KF), une vitesse de rotation de l'axicon (L) autour de l'axe conique (KA) et une fréquence de mouvement linéaire oscillant relatif (axe d'oscillation R) de l'outil (W1, W2) sont coordonnées au-dessus de la surface conique (KF) de telle sorte que le nombre de mouvements de va-et-vient de l'outil (W1, W2) par tour de l'axicon (L) n'est pas pair.

3. Procédé d'usinage de précision d'un axicon (L) selon la revendication 2, dans lequel, pendant l'usinage de précision de la surface conique (KF), le nombre de mouvements de va-et-vient de l'outil (W1, W2) par tour de l'axicon (L) autour de l'axe conique (KA) est supérieur ou égal à 3 et inférieur ou égal à 7.

4. Dispositif (10) pour l'usinage de précision d'un axicon (L) qui présente au moins une surface conique (KF) concave ou convexe avec un axe conique (KA) et un angle conique (α), avec un outil (W1, W2) qui possède une zone d'usinage (BB) pour une prise linéaire (LE) avec la surface conique (KF) à usiner, comprenant
une base (22) qui est adaptée pour être bridée sur une broche porte-outil (14) d'une machine d'usinage de précision (12),
un dispositif de guidage (24) monté sur la base (22), qui guide de manière mobile longitudinalement un chariot porte-outil (26) pouvant être entraîné de manière oscillante le long d'un axe d'oscillation (R), lequel chariot porte-outil porte l'outil (W1, W2) pour l'usinage de précision de l'axicon (L),
un mécanisme d'entraînement (58) qui est adapté pour convertir un mouvement de rotation généré par la broche porte-outil (14) en un mouvement linéaire alternatif du chariot porte-outil (26) le long de l'axe d'oscillation (R), et qui présente à cet effet un disque rotatif (60) pouvant être relié à la broche porte-outil (14) pour l'entraînement, qui peut tourner autour d'un axe de rotation (C) et sur lequel est monté un boulon de guidage (64) décalé radialement par rapport à l'axe de rotation (C), qui s'engage dans une fente (66, 76) qui est formée dans le chariot porte-outil (26) en s'étendant transversalement à l'axe d'oscillation (R), de sorte que le chariot porte-outil (26) peut être entraîné de manière oscillante avec une course prédéterminée (H1, H2, H3) le long de l'axe d'oscillation (R),
le disque rotatif (60) étant pourvu de plusieurs alésages de fixation (68, 70, 72) pour le boulon de guidage (64), qui présentent une distance radiale différente (r1, r2, r3) par rapport à l'axe de rotation (C), de sorte que la course (H1, H2, H3) du chariot porte-outil (26) est réglable, et/ou
le chariot porte-outil (26) présentant au moins deux fentes (66, 76) s'étendant parallèlement l'une à l'autre pour la prise sélective du boulon de guidage (64), par l'intermédiaire desquelles une position axiale relative du chariot porte-outil (26) est réglable par rapport à l'axe de rotation (C).

5. Dispositif (10) selon la revendication 4, dans lequel le dispositif de guidage (24) présente un cadre de guidage (48) sur lequel sont montés, sur des côtés opposés, des rails de guidage (52) pour le chariot porte-outil (26).

6. Dispositif (10) selon la revendication 5, les rails de guidage (52) constitués d'un matériau de palier lisse présentant, sur des côtés tournés l'un vers l'autre, une rainure en forme de V (54), le chariot porte-outil (26) possédant, sur des côtés opposés, une partie de guidage en forme de coin (56), et les parties de guidage en forme de coin (56) du chariot porte-outil (26) étant logées de manière coulissante dans les rainures en forme de V (54) des rails de guidage (52).

7. Dispositif (10) selon l'une des revendications 4 à 6, dans lequel une pièce de liaison (80) avec un dispositif de guidage supplémentaire (88) est montée sur le chariot porte-outil (26), qui sert à guider l'outil (W1, W2) de manière mobile dans une direction transversale à l'axe d'oscillation (R) du chariot porte-outil (26), et dans lequel l'outil (W1, W2) est soumis, dans la direction transversale à l'axe d'oscillation (R) du chariot porte-outil (26), à une force qui repousse l'outil (W1, W2) de la pièce de liaison (80).

8. Dispositif (10) selon la revendication 7,
dans lequel la force est exercée par au moins deux aimants (108) qui se repoussent mutuellement et qui sont agencés entre la pièce de liaison (80) et l'outil (W1, W2), et/ou
dans lequel le dispositif de guidage supplémentaire (88) présente au moins un cylindre de guidage (90) et/ou
dans lequel la pièce de liaison (80) est fixée de manière variable dans sa position axiale le long de l'axe d'oscillation (R) sur le chariot porte-outil (26) et/ou
dans lequel l'outil (W1, W2) est monté de manière variable dans sa position axiale le long de l'axe d'oscillation (R) sur le dispositif de guidage supplémentaire (88).

9. Dispositif (10) selon l'une des revendications 4 à 8,
l'outil (W1) présentant, en vue de dessus, essentiellement la forme d'un triangle isocèle avec une zone d'usinage (BB) qui présente une extrémité avant (EB) à une pointe du triangle et qui permet, sur des côtés longs opposés du triangle, une prise linéaire (LE) avec la surface conique (KF) à usiner de l'axicon (L), ou
l'outil (W2) étant essentiellement en forme de barre, avec une zone d'usinage (BB) qui présente une extrémité avant (EB) sur un côté transversal de l'outil (W2) et qui permet une prise linéaire (LE) avec la surface conique (KF) à usiner de l'axicon (L) le long d'un côté longitudinal de l'outil (W2).

10. Machine d'usinage de précision (12) comprenant une broche porte-outil (14) avec un axe de rotation d'outil (C) et une broche porte-pièce (16) avec un axe de rotation de pièce (D), qui font saillie dans un espace de travail (18) délimité par un banc de machine (20) et qui sont déplaçables l'une par rapport à l'autre (axe Y, axe Z) au moins dans un plan (Y-Z) défini par l'axe de rotation de l'outil (C) et l'axe de rotation de la pièce (D) et qui sont pivotantes l'une par rapport à l'autre par rapport à un axe de pivotement (axe A) qui s'étend perpendiculairement au plan (Y-Z), un dispositif (10) étant monté à une extrémité de la broche porte-outil (14) tournée vers la broche porte-pièce (16) pour l'usinage de précision d'un axicon (L) selon l'une des revendications 4 à 9.

11. Machine d'usinage de précision (12) selon la revendication 10, le banc de machine (20) présentant deux parois latérales (28) entre lesquelles est formé l'espace de travail (18) et qui supportent un portique (30) déplaçable dans une direction longitudinale (axe Y), sur lequel la broche porte-outil (14) est guidée de manière à pouvoir se déplacer au moins dans une direction (axe Z) perpendiculaire à la direction longitudinale (axe Y), et dans laquelle un étrier (36) portant la broche porte-pièce (16) est prévu dans l'espace de travail (18), qui est montée de manière rotative sur les parois latérales (28) autour de l'axe de pivotement (A).

12. Utilisation d'une machine d'usinage de précision (12) selon la revendication 10 ou 11, sur la broche porte-outil (14) de laquelle est monté un dispositif (10) selon l'une des revendications 4 à 9, pour l'usinage de précision d'un axicon (L) qui présente au moins une surface conique concave ou convexe (KF) avec un axe conique (KA) et un angle conique (α).
